# EUROPÄISCHE PATENTSCHRIFT

(11) **EP 4 412 944 B1**
(45) Veröffentlichungstag und Bekanntmachung des Hinweises auf die Patenterteilung: **08.04.2026**
(21) Anmeldenummer: 23713293.1
(22) Anmeldetag: 23.02.2023
(51) Int. Cl.: B67D 1/04, B67D 1/12, B67D 1/08, G05D 16/00, B67D 1/14, G05D 16/06

(54) **ZAPF- UND REGELEINRICHTUNG ZUM AUSBRINGEN EINER FLÜSSIGKEIT AUS EINEM BEHÄLTNIS**
TAP AND CONTROL DEVICE FOR DISPENSING A LIQUID FROM A CONTAINER
DISPOSITIF DE PRÉLÈVEMENT ET DE RÉGULATION DESTINÉ À SOUTIRER UN LIQUIDE D'UN RÉCIPIENT

(30) Priorität: 23.02.2022 DE 202022002781 U
(43) Veröffentlichungstag der Anmeldung: 14.08.2024
(73) Patentinhaber: OAM GmbH, 69259 Wilhelmsfeld (DE)
(72) Erfinder: OBERHOFER, Timm, 69259 Wilhelmsfeld (DE)
(74) Vertreter: Ullrich & Naumann PartG mbB
(86) Internationale Anmeldenummer: PCT/DE2023/200038
(87) Internationale Veröffentlichungsnummer: WO 2023/160760

(56) Entgegenhaltungen:
- EP-A1- 1 428 791
- EP-A1- 2 009 535
- WO-A1-2005/115873
- DE-A1- 102016 101 555
- DE-T5- 112006 003 934
- US-A- 5 110 012
- US-A1- 2006 163 292
- US-A1- 2006 175 355
- US-B2- 10 099 912

## Beschreibung

Die Erfindung betrifft eine Zapf- und Regeleinrichtung zum Ausbringen einer Flüssigkeit aus einem Behältnis, insbesondere aus einem Getränkebehältnis, vorzugsweise zum Ausbringen eines Bieres oder eines Biergetränks aus einem Bierfass, vorzugsweise aus einem 5L-Party-Bierfass. Des Weiteren betrifft die Erfindung ein Behältnis, beispielsweise ein 5L-Party-Bierfass, mit einer solchen Zapf- und Regeleinrichtung.

Gattungsbildende Zapf- und Regeleinrichtungen sowie Getränkebehälter der hier in Rede stehenden Art sind hinlänglich aus der Praxis bekannt. Dies gilt insbesondere für sog. 5L-Party-Bierfässer.

Party-Bierfässer sind in unterschiedlichsten Ausgestaltungen bekannt. Die Bierfässer sind regelmäßig aus Weißblech hergestellt und haben im unteren Bereich, nahe dem Boden, einen Zapfhahn. Im oberen Bereich, vorzugsweise im Deckel, ist ein Be- und Entlüftungsventil vorgesehen. Dieses wird beim Zapfen geöffnet, so dass das Bier aufgrund der Schwerkraft aus dem im unteren Bereich angeordneten Zapfhahn auslaufen kann. Hier ist nachteilig, dass bei geringer Restmenge an Bier dieses nur zögerlich aus dem Zapfhahn läuft. Außerdem verdirbt eine im Party-Bierfass verbliebene Restmenge an Bier äußerst schnell. Entsprechend muss das Bier schnellstmöglich verzehrt werden.

Aus EP 2 009 535 ist ein Party-Bierfass bekannt, bei dem der Zapfhahn im oberen Bereich des Getränkebehälters, genauer gesagt im oberen Bereich der Seitenwand des Getränkebehälters, angeordnet ist. Zur Aufrechterhaltung eines zum Zapfen erforderlichen Mindest-Drucks ist im Inneren des Behälters eine Druckquelle in Form einer Kohlendioxid-Patrone angeordnet. Wird Bier gezapft, wird über die Druckquelle der im Inneren des Fasses herrschende Druck automatisch nachreguliert, so dass dieser bis ganz zum Schluss des Zapfens ausreicht, um das Bier über das Steigrohr nach oben zum Zapfhahn zu fördern.

Aus DE 10 2019 207 114 A1 ist ebenfalls ein 5L-Party-Bierfass bekannt, wobei auch dieses Bierfass innerhalb des Behälters eine Druckdose mit Kohlendioxid umfasst. Auch hier ist die Zapfeinheit im oberen Bereich der Wandung des Bierfasses angeordnet und muss zum Zapfen orthogonal zur Längsachse des Bierfasses herausgezogen werden.

Aus DE 10 2016 101 555 A1 ist ferner ein Verschluss für ein Behältnis bekannt, wobei der Verschluss einen Grundkörper mit einem Wandungsabschnitt umfasst, der radial außenseitig an einem Mündungsabschnitt des Behältnisses anlegbar ist, sowie einen Deckelabschnitt mit einer dem Behältnis abgewandten Außenseite und einer dem Behältnis zugewandten Innenseite. Im Deckelabschnitt ist eine Ausnehmung zur Aufnahme einer Einstecheinrichtung vorgesehen. An der Innenseite des Deckelabschnitts schließt sich an diese Ausnehmung ein schlauch- oder rohrförmiges Leitungselement an, wobei der Abstand zwischen dem freien Ende des Leitungselements und dem Deckelabschnitt des Grundkörpers reversibel verringerbar ist.

Aus DE 11 2006 003 934 T5 ist ein Getränkespender mit einer Gaspatrone, einem Gaspatronen-Lochdorn und einem Druckregler bekannt, der zunächst vollständig innerhalb eines Getränkebehälters angeordnet ist, jedoch daraus entnommen und in eine Betriebsstellung gebracht werden kann.

Darüber hinaus ist aus WO 2005/115873 ein Getränkespender bekannt, der eine Steigrohranordnung zum Ausgeben von Flüssigkeit aus dem Inneren eines Fasses umfasst. Das Steigrohr ist so ausgestaltet, dass es mit einer Zugangsöffnung in der oberen Wand des Fasses verbindbar ist und sich in das Fassinnere erstreckt. Weiterhin ist ein Verlängerungsrohr vorgesehen, das mit dem Steigrohr koppelbar ist und entlang seiner Längsachse zwischen einer ausgezogenen und einer komprimierten Stellung verstellbar ist. Das Verlängerungsrohr ist dabei in Richtung der ausgezogenen Stellung vorgespannt, sodass dessen unteres Ende beim Einsetzen des Steigrohrs in das Fass in Richtung der Fassbodenwand hineinragt.

Zur Aktivierung des Drucksystems ist im Bodenbereich eine Aktivierungseinrichtung eingebaut, wonach das Drucksystem von außerhalb des Bierfasses aktivierbar ist. Ein entsprechendes Regelventil ist vorgesehen.

Die bekannten 5L-Party-Bierfässer sind in der Praxis problematisch, da auch bei eingeschobenem Zapfhahn, d.h. im nicht-aktivierten Zustand, der Zapfhahn mit einem Betätigungsorgan ungeschützt zumindest geringfügig nach außen ragt, so dass insbesondere beim Transport und bei der Handhabung die Gefahr besteht, dass der äußere Bereich des Zapfhahns, insbesondere das auch in der Transport- und Lagerposition außerhalb des Behältnisses befindliche Betätigungsorgan, beschädigt wird. In einem solchen Falle wird die Zapfeinheit unbrauchbar. Außerdem ist die Vorkehrung separater Einheiten - Druckeinheit mit Regeleinheit und Zapfeinheit - aufwändig in der Konstruktion und beim Einsetzen in das Behältnis. Die Handhabung ist sowohl für den Abfüller des Bieres als auch für den Kunden/Endverbraucher kompliziert.

Der Erfindung liegt daher die Aufgabe zugrunde, eine Zapf- und Regeleinrichtung zum Ausbringen einer Flüssigkeit aus einem Behältnis, insbesondere aus einem Getränkebehältnis, vorzugsweise zum Ausbringen eines Bieres oder eines Biergetränks aus einem Bierfass, vorzugsweise aus einem 5L-Party-Bierfass, derart auszugestalten und weiterzubilden, dass die Handhabung sowohl für den Abfüller des Getränks als auch für den Endkunden einfach ist. Die Gefahr von Leckagen im bzw. am Behältnis soll weitestgehend vermieden werden. Außerdem soll sich die Zapf- und Regeleinrichtung von wettbewerblichen Produkten unterscheiden. Voranstehende Aufgabe ist in Bezug auf die erfindungsgemäße Zapf- und Regeleinrichtung durch die Merkmale des Patentanspruchs 1 gelöst. Danach umfasst die Zapf- und Regeleinrichtung eine stab- oder zylinderförmige Anordnung aus Druckeinheit, Regeleinheit und Zapfeinheit. Die drei Einheiten sind in einer stab- oder zylinderförmigen Anordnung in einem ein- oder mehrteiligen Gehäuse miteinander kombiniert. So ist es möglich, die gesamte Anordnung durch eine einzige Öffnung im Deckel des Behältnisses nahezu bündig in das Behältnis einzustecken, die es abzudichten gilt. Im Gegensatz zum Stand der Technik benötigt das Behältnis nur eine einzige Öffnung, nämlich zum Einbringen der gesamten Anordnung. Der zum Abdichten notwendige Aufwand ist gegenüber dem Stand der Technik reduziert.

Die Zapfeinheit ist von einer in die Anordnung eingesteckten Transport- und Lagerposition in eine aus der Anordnung entnommene und mit dieser strömungsverbundenen Gebrauchsposition verbringbar. Dies bedeutet, dass sich die Zapfeinheit zunächst komplett innerhalb der Anordnung befindet, die als Transport- und Lagerposition definiert ist. Ein kleiner Bereich, der zur Handhabung der Zapfeinheit bzw. zum Verbringen der Zapfeinheit in die Gebrauchsposition dient, ist derart flach ausgebildet, dass er ähnlich einem flachen Schraubenkopf am Deckel um die Öffnung herum weitestgehend zur Anlage kommt. Geht man davon aus, dass dieser Bereich wesentlich tiefer liegt als der umlaufende Rand bzw. Falz des Bierfasses, ist der in der Transport- und Lagerposition außerhalb des Behältnisses angeordnete Teil der Zapf- und Regeleinrichtung umlaufend geschützt, so dass eine unbeabsichtigte Beschädigung nahezu ausgeschlossen ist.

Wird die Zapfeinheit aus ihrer Transport- und Lagerposition beispielsweise durch Drehen eines äußeren Teils entnommen, kann sie in eine Gebrauchsposition verbracht werden, nämlich durch Herausziehen der Zapfeinheit aus der stab- oder zylinderförmigen Anordnung, die sich innerhalb des Behältnisses befindet. Es ist selbstredend, dass diese Anordnung druckdicht ist, so dass durch Entnahme der Zapfeinheit keine Leckage entsteht. Die Strömungsverbindung der Zapfeinheit mit der Regeleinheit ermöglicht eine druckgeförderte Entnahme der Flüssigkeit bzw. des Bieres dort, wo die Zapfeinheit positioniert wird. Diese Position ist als Gebrauchsposition zu verstehen.

Zum einfachen und bequemen Zapfen wird die aus der stab- oder zylinderförmigen Anordnung entnommene Zapfeinheit an dem Behältnis befestigt, vorzugsweise an dessen Rand oder Falz. Die Anbringung kann durch Aufstecken oder Anklipsen erfolgen, dergestalt, dass der eigentliche Zapfhahn über die seitliche Wandung des Behältnisses hinausragt, so dass wie bei einem herkömmlichen Bierfass von der Seite her gezapft werden kann. Dabei ist sicherzustellen, dass die Strömungsverbindung aus der stab- oder zylinderförmigen Anordnung heraus zur Zapfeinheit gewährleistet ist. Voranstehende Ausführungen machen deutlich, dass die erfindungsgemäße Zapf- und Regeleinrichtung sowohl für den Abfüller als auch für den Endkunden eine einfache Handhabung bis hin zum Zapfen des Bieres ermöglicht, wobei die Anordnung der Zapfeinheit ganz oben im Randbereich des Behältnisses ein Zapfen auch in größere Gläser/Behältnisse hinein ermöglicht.

Die Druckeinheit umfasst als unteres, erstes Gehäuseteil ein endseitiges Patronengehäuse mit einer darin angeordneten Gaspatrone. Dabei handelt es sich regelmäßig um eine CO₂-Patrone. An das Patronengehäuse schließt sich als zweites Gehäuseteil ein Dichtgehäuse an, welches gegenüber dem Patronengehäuse abdichtet oder mit dem Patronengehäuse einteilig ausgeführt ist. Das Dichtgehäuse ist wie das Patronengehäuse zumindest bereichsweise nach außen abgedichtet.

Das Dichtgehäuse umfasst einen nach außerhalb nicht abgedichteten Stauraum, in den die Zapfeinheit, vorzugsweise kopfüber, in ihrer Transport- und Lagerposition weitestgehend eingesteckt ist. Im eingesteckten Zustand schließt die Zapfeinheit das Dichtgehäuse am freien Ende ab, wobei es sich hier nicht um einen flüssigkeitsdichten Abschluss handelt. Durch Drehen der Zapfeinheit wird im Inneren ein Drehkolben gedreht, bis ein Eintrittsloch im Dichtgehäuse mit einem Eintrittsloch im Drehkolben in Überdeckung ist. Dadurch aktiviert der Benutzer die Zapfeinrichtung.

Wird die Zapfeinheit aus ihrer Transport- und Lagerposition herausgezogen, verbleibt der "leere" Stauraum, der zum Inneren hin, d.h. gegenüber der Regeleinheit und Druckeinheit, abgedichtet ist, so dass von dort aus die im Inneren des Behältnisses unter Druck stehende Flüssigkeit nicht nach außerhalb gelangen kann. Die gesamte stab- oder zylinderförmige Anordnung ist im eingesteckten Zustand gegenüber dem Rand der Öffnung, in die sie in das Behältnis eingesteckt ist, abgedichtet, und zwar druckdicht, entsprechend dem im Behältnis herrschenden Innendruck.

Es ist erfindungswesentlich, dass sich ein Steigrohr vom Dichtgehäuse aus über das Patronengehäuse hinweg, über dieses hinaus, aus einem starren, festen Material erstreckt. Bei diesem Material kann es sich um ein Kunststoffmaterial handeln. Das Steigrohr erstreckt sich im Konkreten über das Patronengehäuse hinaus in einen unteren Bereich des Behältnisses, möglichst nahe am Boden bzw. bis zum Boden.

Das Steigrohr kann beliebig ausgebildet bzw. angeordnet sein. Vorzugsweise ist es außen am Patronengehäuse angebracht oder in das Patronengehäuse integriert. Somit erstreckt sich das Steigrohr entlang dem Patronengehäuse.

Im Konkreten erstreckt sich das Steigrohr vom unteren Ende eines Durchgangsbogens des Dichtgehäuses aus über das Patronengehäuse hinweg nach unterhalb des Patronengehäuses, entsprechend den voranstehenden Ausführungen. Unterhalb des Patronengehäuses, vorzugsweise auf der dem Patronengehäuse zugewandten Innenseite, ist das Steigrohr mit einer Art Knickfunktion ausgestattet. Diese Knickfunktion wird durch eine Materialschwächung vorzugsweise auf der Außenseite des Steigrohrs erreicht. Im Konkreten können dort Einkerbungen zur Realisierung der Knickfunktion vorgesehen sein, beispielsweise drei Einkerbungen, die untereinander vorzugsweise äquidistant zueinander oder aber auch in unterschiedlichen Abständen zueinander ausgebildet sind.

Am unteren Bereich des Patronengehäuses, möglichst an das Steigrohr angrenzend, ist ein Versteifungselement als Widerlager für das Steigrohr ausgebildet, welches bei Krafteinwirkung auf das Steigrohr als Widerlage dient. Dadurch ist ein Abknicken des Steigrohrs begünstigt. Das Patronengehäuse, das Steigrohr und das Widerlager können integrale Bestandteile eines einzigen Bauteils sein.

In weiter vorteilhafter Weise weist das Steigrohr an seinem freien Ende eine abgeschrägte Steigrohrspitze auf, die bei einer Bodenberührung des Steigrohrs, nämlich beim Einstecken oder Einrasten der gesamten Anordnung, dem Steigrohr eine bevorzugte Knickrichtung vermittelt. Dadurch wird einerseits das Einstecken der Anordnung in das Behältnis begünstigt und andererseits ein die Funktion beeinträchtigendes undefiniertes ungewolltes Abknicken oder Verbiegen des Steigrohrs vermieden.

Um zu verhindern, dass das freie Ende des Steigrohrs, durch das hindurch das Fluidum einströmen soll, durch Anlage am Boden verschlossen wird, ist das Steigrohr am freien Ende mit zwei Abschrägungen mit unterschiedlichen Winkeln ausgestattet, die aufgrund der abgeknickten Fläche ein Verschließen des Steigrohrs durch vollflächige Anlage am Boden verhindern. Durch die abgeknickte Fläche kann Fluidum stets in das Steigrohr einströmen, ganz gleich, wie das freie Ende des Steigrohrs am Boden zur Anlage kommt.

Voranstehende Maßnahme kann durch eine weitere Maßnahme begünstigt oder ersetzt werden, nämlich dadurch, dass die einfach oder doppelt geschrägte Steigrohrspitze eine zusätzliche Öffnung aufweist. Diese Öffnung ist am freien Ende des Steigrohrs ausgebildet, und zwar im Sinne einer vorzugsweise randseitigen Ausnehmung, so dass auch bei flächiger Anlage der geschrägten Steigrohrspitze am Boden Flüssigkeit in das Steigrohr eindringen kann, nämlich durch die zusätzliche Öffnung hindurch. Ein unbeabsichtigtes Verschließen des Einströmbereichs des Steigrohrs ist dadurch wirksam vermieden.

Zwischen den beiden Gehäuseteilen - Patronengehäuse und Dichtgehäuse - kann ein mittleres Gehäuseteil oder ein Übergangsbereich in den beiden Gehäuseteilen vorgesehen sein, in dem die Regeleinheit ausgebildet ist. Die Regeleinheit ist gegenüber dem Stauraum für die Zapfeinheit, d.h. gegenüber der Umgebung des Behältnisses, flüssigkeitsdicht.

Die Regeleinheit kann in einer Druckhülse angeordnet sein, die als Zwischenstück zwischen dem Patronengehäuse und dem Dichtgehäuse ausgeführt sein kann.

Außerhalb des Patronengehäuses und ggf. des mittleren Gehäuseteils oder des Übergangsbereichs ist ein Steigrohr zum druckbedingten Aufsteigen der Flüssigkeit ausgebildet. Das Steigrohr kann ebenso integraler Bestandteil der Gehäuseteile sein. Im Bereich des Dichtgehäuses mündet das Steigrohr in dieses hinein, und zwar im Inneren des Dichtgehäuses in einen internen Fließkanal, der über eine elastische Strömungsverbindung mit dem Zapfkanal der Zapfeinheit strömungsverbunden ist. Druck herrscht somit ausschließlich in der Strömungsverbindung und nicht im Stauraum der Zapfeinheit. Dieser ist gegenüber dem Inneren des Behältnisses abgedichtet.

Bei der elastischen Strömungsverbindung handelt es sich in vorteilhafter Weise um einen elastischen Schlauch, der gerade so lang ausgeführt ist, dass er einerseits in den Stauraum passt und andererseits bis hin zur Gebrauchsposition der Zapfeinheit führt, nämlich im herausgezogenen Zustand der Zapfeinheit.

Die Druckeinheit umfasst eine Druckhülse mit einer Einschraubhülse und einem Ventilstössel, der über die damit wirkverbundene Regeleinheit betätigbar ist. Die Druckpatrone ist in die Einschraubhülse eingeschraubt und lässt sich über den Ventilstössel betätigen, wobei eine erste Betätigung mit Entnahme der Zapfeinheit erfolgt. Erst danach ist die Druckpatrone aktiviert und kann das zum Ausbringen der Flüssigkeit erforderliche Gas in den Innenraum des Behältnisses strömen. Wird ein vorgegebener Innendruck erreicht, schließt die Regeleinheit die Druckeinheit automatisch in herkömmlicher Weise. Dazu sei auf den eingangs zitierten Stand der Technik verwiesen.

Die Regeleinheit umfasst eine auf den Ventilstössel wirkende Membran, die dem Druck einer zwischen der Druckhülse und der Membran ausgebildeten Drucckammer ausgesetzt ist. Gegen den Druck eines federkraftbeaufschlagten Druckspanners öffnet oder schließt die Druckpatrone über den Ventilstössel in herkömmlicher Weise.

Zwischen der Regeleinheit und der Zapfeinheit, vorzugsweise in einem der Regeleinheit zugewandten Bereich des Druckgehäuses, ist eine Überdrucksicherung vorgesehen, die eine federkraftbeaufschlagte Berstscheibe nebst Siegelring umfassen kann. Der Siegelring stellt einen Indikator für ein einmaliges Auslösen dar.

Die Zapfeinheit umfasst einen Zapfkopf mit einem sich an den elastischen Schlauch anschließenden Zapfkanal und einen zur Betätigung dienenden Zapfhebel. An dieser Stelle sei angemerkt, dass die Strömungsverbindung des elastischen Schlauchs beidseitig durch Aufstecken des Schlauchs mittels Klemmwirkung realisierbar ist.

Des Weiteren ist es von Vorteil, wenn die Zapfeinheit eine Art Ventilwalze umfasst, die auf Betätigen des Zapfhebels den Zapfkanal sukzessive öffnet oder schließt. So lässt sich der Strömungskanal vom komplett geschlossenen Zustand bis hin zum komplett geöffneten Zustand und umgekehrt öffnen oder schließen. Eine Dosierung bzw. Drosselung der auszubringenden Flüssigkeitsmenge ist möglich.

Die Zapfeinheit hat an ihrem stirnseitigen Ende ein Handhabungsorgan, welches zum Herausziehen der Zapfeinheit aus dem druckfreien Stauraum innerhalb der stab- oder zylinderförmigen Anordnung dient. Dadurch gelangt die Zapfeinheit aus der gesicherten Transportposition in die Betätigungsposition, wobei die Zapfeinheit dorthin händisch verbracht wird.

Des Weiteren ist es von Vorteil, wenn die Anordnung ein Originalitätssiegel umfasst. **In** der Transportposition verbindet das Originalitätssiegel den Zapfkopf mit dem Dichtgehäuse in lösbarer Weise. Gleichzeitig kann das Originalitätssiegel das freie Ende des Zapfkanals, d.h. den Auslauf, verschließen. Beim Herausziehen der Zapfeinheit mittels Handhabungsorgan löst sich das Originalitätssiegel von dem Dichtgehäuse irreversibel. Dabei kann es beispielsweise brechen. Es gibt danach den Zapfkanal zum Auslauf frei. An dieser Stelle sei vermerkt, dass durch Entnahme der Zapfeinheit die Regeleinheit auf die Druckeinheit wirkt und aufgrund eines Ausströmens des Gases bei Betätigung des Zapfhebels ein Zapfen möglich ist.

Zur Positionierung des Zapfkopfes weist dieser eine Klemmeinrichtung auf, im einfachsten Falle ein zum Aufstecken auf den Falz geeigneter Spalt, der zum klemmenden Aufstecken des Zapfkopfes auf den Rand oder Falz des Behältnisses dient. Zum sicheren Anbringen kann die Klemmeinrichtung mit einem Hinterschnitt ausgestattet sein, so dass sich der Zapfkopf am bzw. auf dem Falz verrasten lässt. Eine sichere Positionierung des Zapfkopfes lässt sich dadurch gewährleisten.

Das Dichtgehäuse kann an seinem freien Ende einen Flansch oder eine umlaufende Schulter zur äußeren Anlage an den Rand der Öffnung im Deckel des Behältnisses aufweisen. Damit ist eine sichere Positionierung der stab- oder zylinderförmigen Anordnung gewährleistest. Außerdem kann das Dichtgehäuse unter bzw. hinter dem Flansch oder der Schulter eine Verrastung mit Dichtmitteln zum Abdichten gegenüber der Öffnung im Deckel des Behältnisses aufweisen, so dass nach dem Einsetzen der stab- oder zylinderförmigen Anordnung in das Bierfass durch den Abfüller eine flüssigkeits- und druckdichte Anordnung geschaffen ist, in vorteilhafter Weise gegenüber dem Stand der Technik mit einer einzigen Öffnung im Behältnis.

Das erfindungsgemäße Behältnis, bei dem es sich um ein beliebiges Getränkebehältnis handeln kann, insbesondere um ein Bierfass, weiter insbesondere um ein 5L-Party-Bierfass, umfasst die zuvor erörterte Zapf- und Regeleinrichtung zum Ausbringen der Flüssigkeit. Damit ist dieses Behältnis gegenüber herkömmlichen Behältnissen der hier in Rede stehenden Art erfinderisch.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. **In** Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in schematischer Ansicht ein Ausführungsbeispiel eines erfindungsgemäßen 5L-Party-Bierfasses mit einer Öffnung im Deckel, ohne Zapf- und Regeleinrichtung,
- Fig. 2: in einer schematischen Ansicht, geschnitten, ein 5-L-Party-Bierfass mit eingesetzter erfindungsgemäßer Zapf- und Regeleinrichtung, wobei die Zapfeinheit sich in der Transport- und Lagerposition innerhalb einer stab- oder zylinderförmigen Anordnung befindet,
- Fig. 2a: in einer schematischen Ansicht, teilweise und vergrößert, die Druck- und Regeleinrichtung des Gegenstands aus Fig. 2,
- Fig. 3: in einer schematischen Ansicht den Gegenstand aus Fig. 2, wobei die Zapfeinheit aus der stab- oder zylinderförmigen Anordnung herausgezogen ist und sich in der am Falz des Bierfasses angeklipsten Gebrauchsposition befindet,
- Fig. 4: in einer schematischen Ansicht den Gegenstand aus Fig. 3, wobei der zum Zapfen dienende Zapfhebel hochgestellt ist,
- Fig. 5: das Bierfass entsprechend der Darstellung aus Fig. 2 in einer Draufsicht,
- Fig. 6: das Bierfass entsprechend der Darstellung aus Fig. 2 in einer perspektivischen Ansicht,
- Fig. 7: das Bierfass entsprechend der Darstellung aus Fig. 2 in einer Frontalansicht,
- Fig. 8: das Bierfass entsprechend der Darstellung aus Fig. 4 in einer perspektivischen Ansicht,
- Fig. 9a: in einer schematischen Ansicht, teilweise, das freie Ende des Steigrohrs mit Versteifungsteg, Knickbereich und zweifach abgeschrägter Fläche nebst zusätzlicher Öffnung,
- Fig. 9b: in einer schematischen Ansicht den Gegenstand aus Fig. 9a, zu den Einkerbungen hin gedreht,
- Fig. 9c: in einer schematischen Ansicht den Gegenstand aus Fig. 9a, abermals zu den Einkerbungen hin gedreht,
- Fig. 9d: in einer schematischen Ansicht den Gegenstand aus Fig. 9a im Schnitt von der Seite,
- Fig. 10a: in einer schematischen Ansicht die erfindungsgemäße Vorrichtung von der dem Steigrohr abgewandten Seite her gesehen,
- Fig. 10b: in einer schematischen Ansicht die erfindungsgemäße Vorrichtung von der dem Steigrohr zugewandten Seite her gesehen,
- Fig. 10c: in einer schematischen Ansicht die erfindungsgemäße Vorrichtung von der Seite her gesehen,
- Fig. 11a: in einer schematischen Ansicht den Gegenstand aus den Figuren 9a bis 9d, vergrößert, von der dem Steigrohr abgewandten Seite her gesehen,
- Fig. 11b: in einer schematischen Ansicht den Gegenstand aus den Figuren 9a bis 9d, vergrößert, von der dem Steigrohr zugewandten Seite her gesehen,
- Fig. 11c: in einer schematischen Ansicht den Gegenstand aus den Figuren 9a bis 9d, vergrößert, von der Seite her gesehen,
- Fig. 12: in einer schematischen Ansicht die gesamte Anordnung, eingesteckt/montiert in ein Bierfass und
- Fig. 13: in einer schematischen Ansicht den erfindungsgemäßen Gegenstand komplett in das Bierfass eingesteckt und verrastet, mit abgeknicktem Steigrohr.

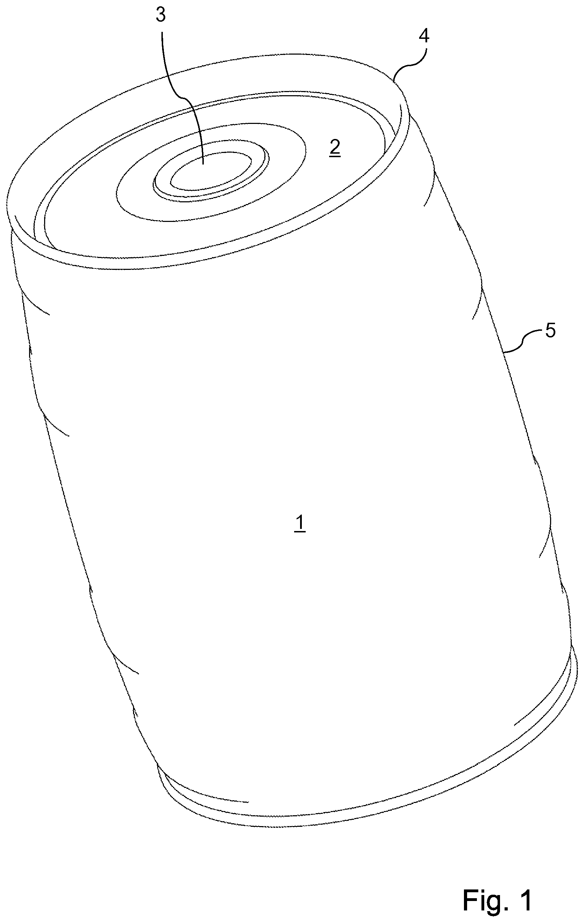

Fig. 1 zeigt in einer schematischen Ansicht ein 5L-Bierfass 1. Oben im Deckel 2 ist eine Öffnung 3 ausgebildet, die als einzige Öffnung in dem Bierfass 1 zu verstehen ist. Folglich ist bei diesem Bierfass 1 auch nur eine einzige Öffnung 3 abzudichten.

Fig. 1 zeigt des Weiteren, dass der Deckel 2 über einen Falz 4 mit der Wandung 5 verbunden ist.

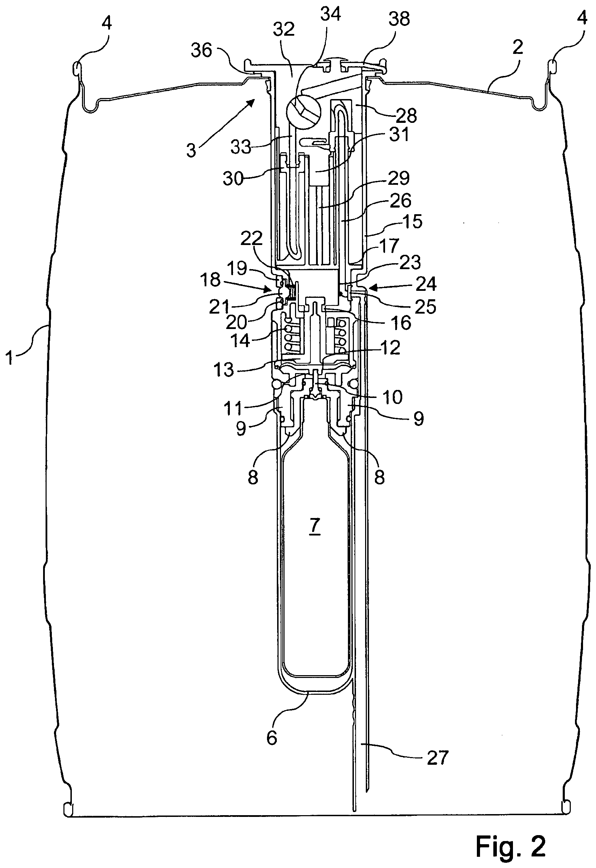

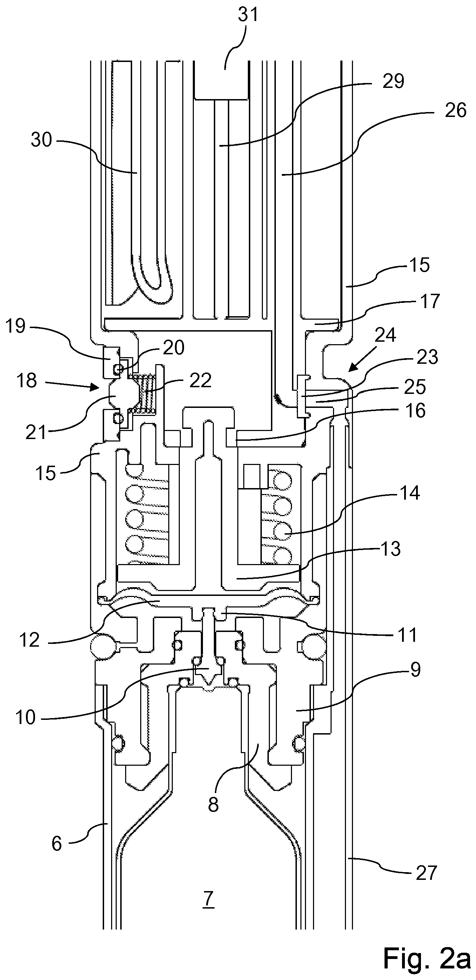

Fig. 2 zeigt in einer schematischen Schnittdarstellung das Bierfass 1 gemäß Fig. 1, wobei die erfindungsgemäße Zapf- und Regeleinrichtung in die Öffnung 3 nahezu bündig eingesteckt ist. Von unten nach oben lässt sich die Zapf- und Regeleinrichtung wie folgt beschreiben:
In einem Patronengehäuse 6 ist eine CO₂-Patrone 7 angeordnet. Die Patrone 7 ist in eine aus Kunststoff oder Edelstahl bestehende Einschraubhülse 8 eingeschraubt. Die Einschraubhülse 8 befindet sich wiederum in einer Druckhülse 9, wobei die Einschraubhülse 8 in die Druckhülse 9 eingeschraubt oder sonstwie darin befestigt sein kann.

Über der Druckhülse 9 befindet sich ein Ventilstössel 10, der mit dem Ende seines Schaftes in einen Flanschfuß 11 einer Membrane 12 eintaucht. Die Membrane 12 dient zur Betätigung des Ventilstössels 10.

Über der Membran 12 ist ein Federspanner 13 angeordnet, wobei auf dem Federspanner 13 eine Regelfeder 14 zur Anlage kommt. Der Federspanner 13 und die Regelfeder 14 sind von dem in die Druckhülse 9 eingeschraubten Dichtgehäuse 15 umgeben.

Das obere Schaftende des Federspanners 13 ragt durch eine Durchgangsöffnung 16 im Dichtgehäuse 15 bis hin zu einem Durchgang am unteren Ende des Drehkolbens 17, in dem der Federspanner 13 verrastet ist. Die Regelfeder 14 bzw. der Teller des Federspanners 13 hat keinen Kontakt zu der Membrane 12. Die Regelfeder 14 ist gestaucht.

Im Freiraum zwischen dem oberen Schaftende des Federspanners 13 und dem unteren Ende des Drehkolbens 17 ist eine Überdrucksicherung 18 vorgesehen.

Die Überdrucksicherung 18 umfasst eine Siegelscheibe 19 mit einer durch einen O-Ring 20 abgedichteten Berstscheibe 21. Diese wird durch eine Druckfeder 22, die sich innen am Dichtgehäuse 15 abstützt, gegen die Berstscheibe 21 nach außen gedrückt.

Gegenüber der Überdrucksicherung 18 ist eine am Drehkolben 17 angebrachte Dichtfläche 23, die gegen einen Durchgangsbogen 24 im Dichtgehäuse 15 abdichtet. Auf der gegenüberliegenden Seite, längs der Dichtfläche 23, ist ein Eintrittsloch 25 am Dichtgehäuse 15 für den Fließkanal des Drehkolbens 17 vorgesehen.

Am äußeren unteren Ende des Durchgangsbogens 24 des Dichtgehäuses 15 fährt das am Patronengehäuse 6 angebrachte bzw.- verlaufende obere Ende eines Steigrohrs 27 formschlüssig in das Gehäuse 1.

In den oberen, inneren Freiraum 28 des Dichtgehäuses 15 ragt der Fließkanal 26 und ein Aktivierungssteg 29 des Drehkolbens 17.

Ein an dem Fließkanal 26 des Drehkolbens 17 befestigter Schlauch 30 sowie ein in den Aktivierungssteg 29 eingeschobener Aktivierungszapfen 31 des Zapfkopfes 32 schließen sich an. Gegenüber dem Aktivierungszapfen 31 befindet sich ein Eintrittskanal 33, an dem das andere freie Ende des Schlauchs 30 befestigt ist.

Der Eintrittskanal 33 des Zapfkopfes 32 mündet in eine Ventilwalze 34, an der ein Zapfhebel 35 befestigt ist.

Am Flansch des Dichtgehäuses 15 ist eine Dichtung 36 vorgesehen, die gegenüber der Außenwandung des Fassdeckels 2 im Bereich der Öffnung 3 wirkt. Außerdem ist ein Originalitätssiegel 38 vorgesehen, welches mit dem Zapfkopf 32 verbunden ist.

Fig. 2a zeigt die wesentlichen zu Fig. 2 erörterten Details in vergrößerter Darstellung.

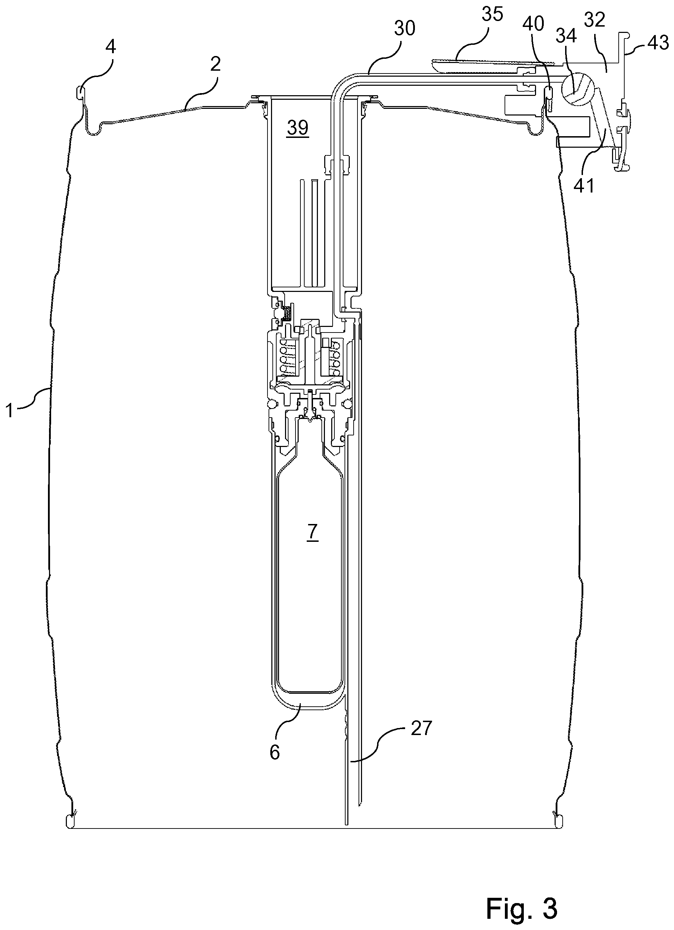

Fig. 3 unterscheidet sich von Fig. 1 dadurch, dass die Zapfeinheit aus ihrer Transport- und Lagerposition in die entnommene Gebrauchsposition verbracht ist. Im Konkreten ist der Zapfkopf 32 auf den Falz 4 des Fassdeckels 2 aufgesteckt. Es ist gut zu erkennen, dass der Schlauch 30 den Zapfkopf 32 mit dem Steigrohr 27 über den Drehkolben 17 strömungsverbindet. Der nach außen offene Stauraum 39 ist nun leer und nach außen offen. Er ist gegenüber dem Fassinneren abgedichtet.

Des Weiteren lässt Fig. 3 erkennen, dass das zum Zapfen dienende Betätigungsorgan, nämlich der Zapfhebel 35, sich in einer flachgelegten Position befindet.

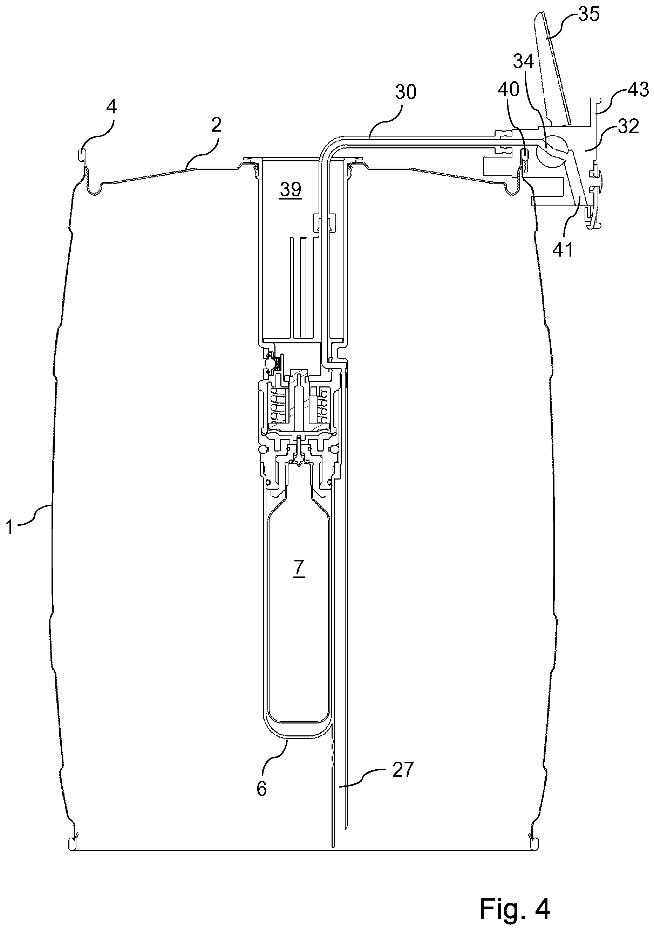

Gemäß Fig. 4 ist der Zapfhebel 35 aufgestellt und kann betätigt werden, wodurch die Ventilwalze 34 gedreht wird.

Die Fig. 2 bis 4 zeigen des Weiteren, dass der Zapfkopf 32 eine schlitzartige Klemmeinrichtung 40 umfasst, mit der der Zapfkopf 32 auf den Falz 4 klemmend aufgesteckt ist.

Die Fig. zeigen des Weiteren den im Zapfkopf 32 ausgebildeten, nach unten gerichteten Auslauf 41.

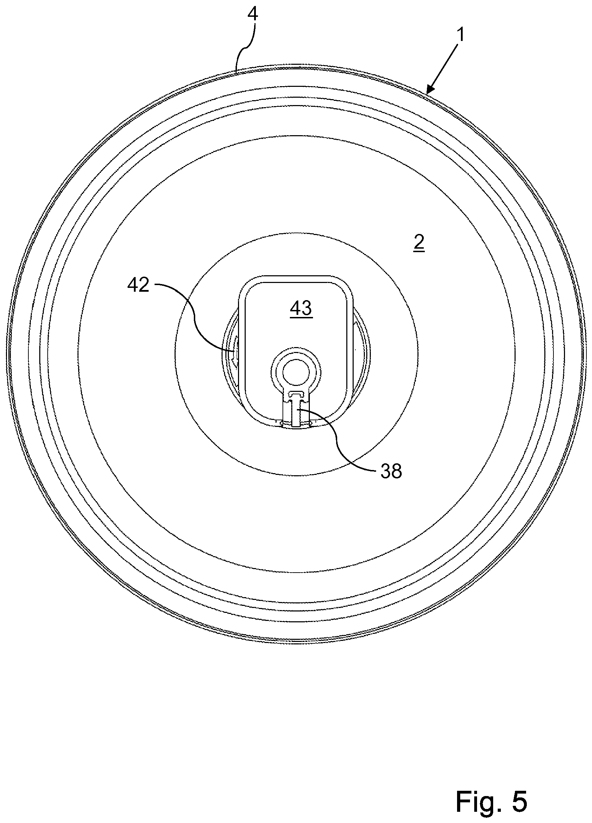

Fig. 5 zeigt das mit der erfindungsgemäßen Zapf- und Regeleinrichtung ausgestattete Bierfass von oben, wobei sich die Zapfeinheit in der Transport- und Lagerposition befindet. Ein Pfeil 42 deutet die Drehrichtung an, in der die von oben erkennbare Lasche oder Schild 43 zu drehen ist, damit der im Stauraum 39 unter einer zumindest geringfügigen Spannung befindliche Zapfkopf 32 aus dem Stauraum 39 heraustritt.

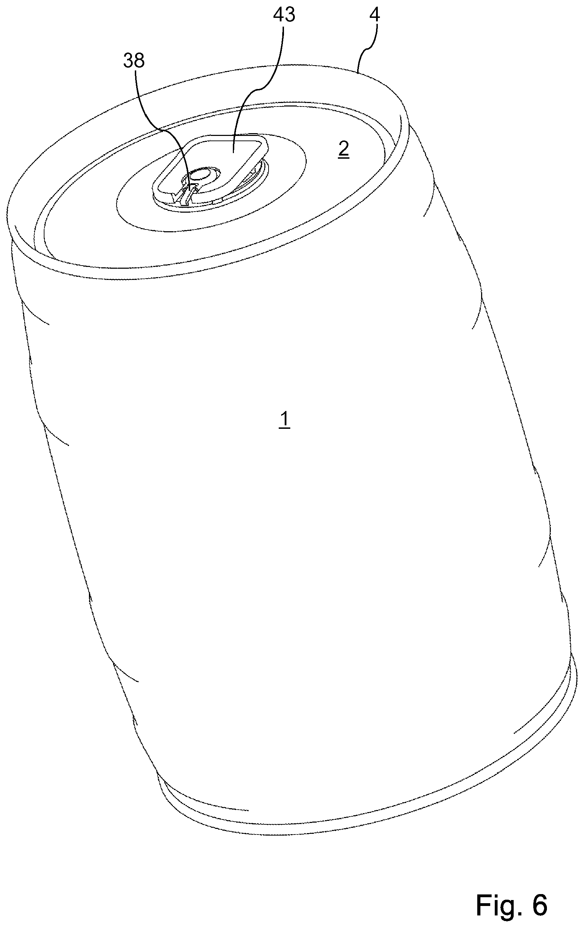

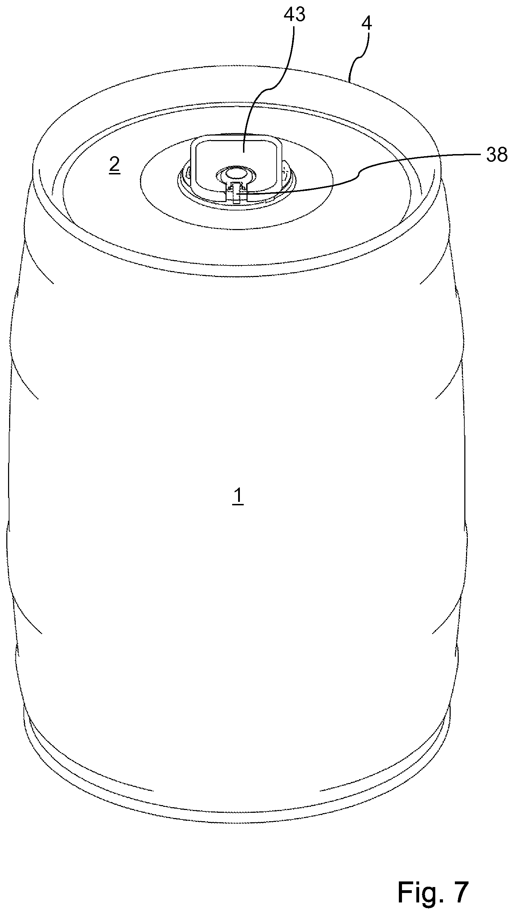

Fig. 6 zeigt das mit der erfindungsgemäßen Zapf- und Regeleinrichtung ausgestattete Fass in einer schematischen, perspektivischen Seitenansicht, Fig. 7 zeigt den Gegenstand aus Fig. 6 in einer Vorderansicht.

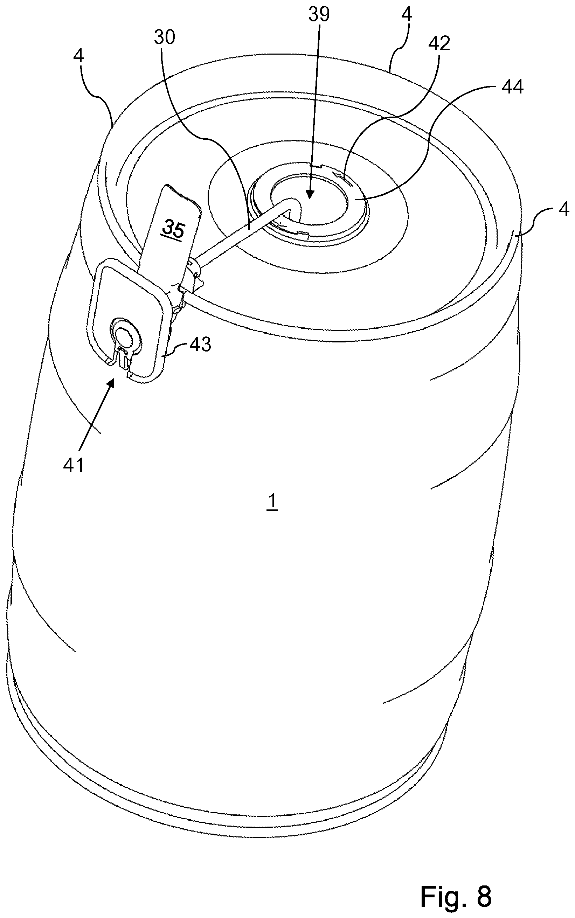

Gemäß der Darstellung in Fig. 8 befindet sich die Zapfeinheit in der Gebrauchsposition und der Zapfkopf 32 ist am oberen äußeren Rand, d.h. am Falz 4 des Bierfasses 1 aufgesteckt. Der Zapfhebel 35 ist zum Zapfen aufgestellt. Der Schlauch 30 führt aus dem Fassinneren heraus, durch die Öffnung 3 zum Zapfkopf 32. Des Weiteren ist zu erkennen, dass an der Öffnung 3 bzw. am oberen Ende des Stauraums 39 eine Befestigungsmanschette oder Flansch 44 vorgesehen ist, an der der Zapfkopf im eingesteckten Zustand innerhalb des Stauraums 39 schraubenartig oder bajonettartig festlegbar ist.

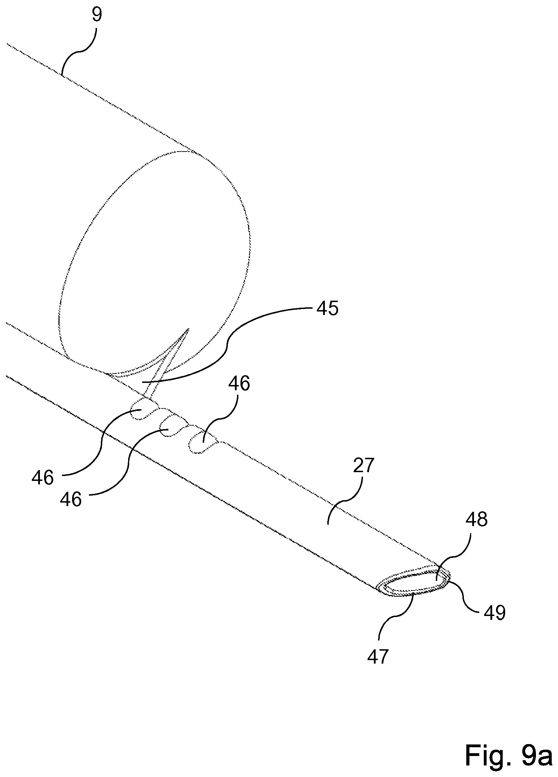

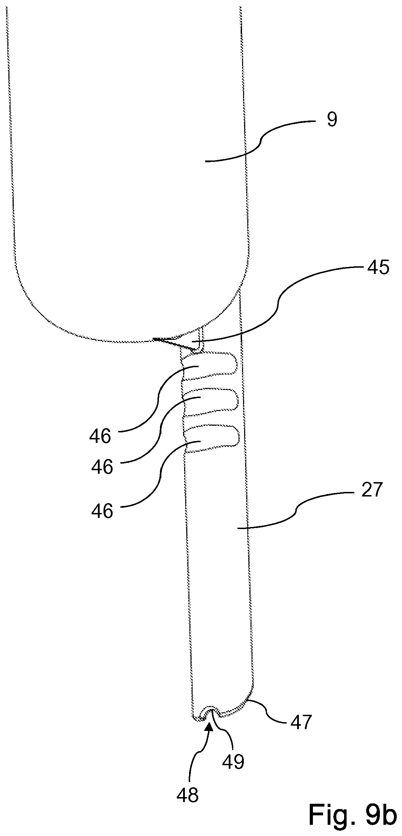

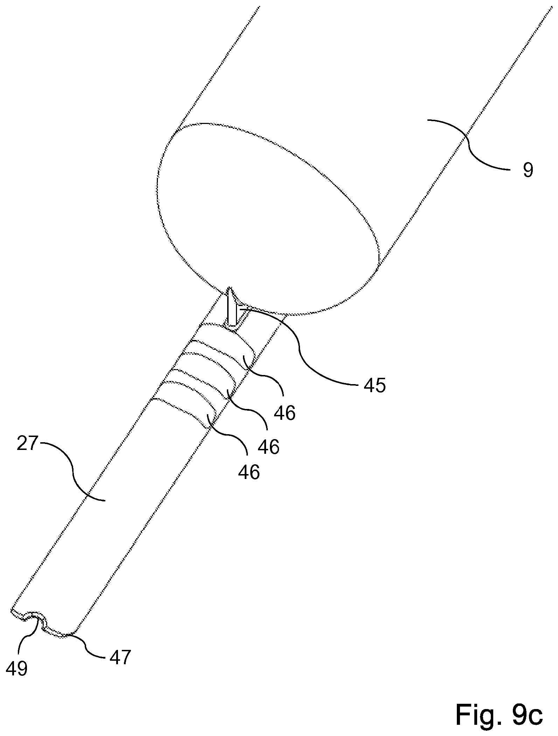

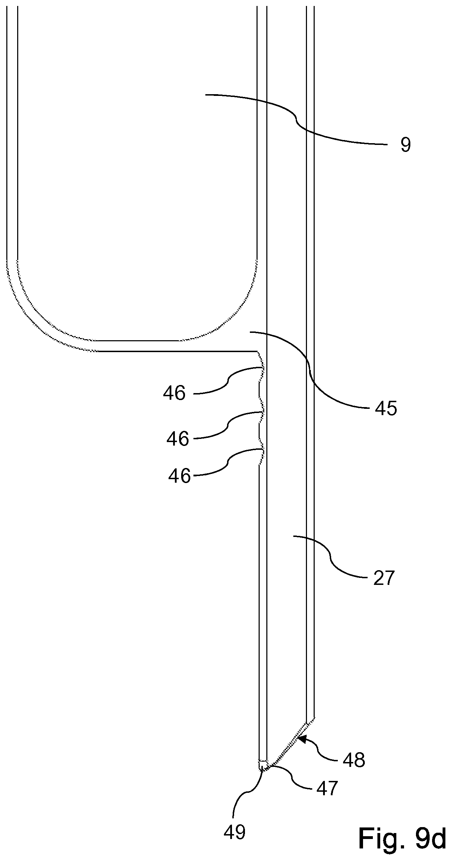

Die Fig. 9a bis 9d zeigen in jeweils schematischen Ansichten, vergrößert, das Steigrohr 27, welches sich über das Patronengehäuse 9 hinweg, im eingebauten Zustand nach unten zum nicht gezeigten Boden des Behälters hin erstreckt. Am Ende der Druckhülse 9 ist ein Versteifungselement 45 vorgesehen, gegen dass sich das Steigrohr 27 abstützt, wenn bzw. sofern es in Richtung des Versteifungselements 45 gedrückt oder gebogen wird.

Zur Begünstigung eines definierten Abknickens des Steigrohrs 27 sind auf der dem Patronengehäuse 9 bzw. dem Versteifungselement 45 zugewandten Seite des Steigrohrs 27 drei Einkerbungen 46 vorgesehen, die ein bewusstes bzw. gewolltes Abknicken des Steigrohrs 27 in einer durch die Einkerbungen 46 vorgegebene Richtung begünstigen. Sofern das Steigrohr 27 mit einer Kraft gegen eine Abschrägung 47 beaufschlagt wird

Das freie Ende des Steigrohrs 27 hat die Abschrägung 47. Des Weiteren ist dort neben der Öffnung 48 eine zusätzliche Öffnung 49 ausgebildet, die auch bei einer vollflächigen Anlage der Abschrägung 47 am Boden des Behältnisses ein Einströmen von Flüssigkeit ermöglicht.

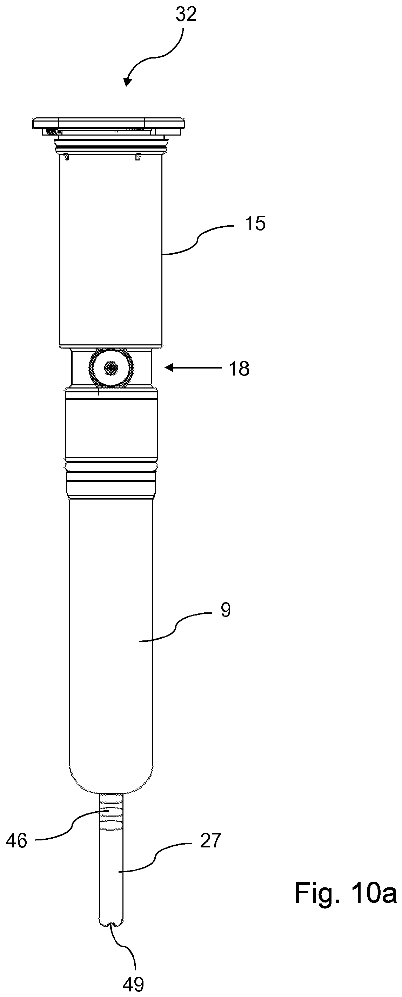

Fig. 10a zeigt die Anordnung von der dem Steigrohr 27 abgewandten Seite. Die Einkerbungen 46 zur Begünstigung des Einknickens sind erkennbar. Auch ist erkennbar, dass die Spitze des Steigrohrs 27 mit einer zusätzlichen Öffnung 49 ausgestattet ist.

Hinsichtlich weiterer Merkmale, die in Bezug auf das Steigrohr 27 nicht relevant sind, sei zur Vermeidung von Wiederholungen auf die Figurenbeschreibung zu den Figuren 2 und 3 verwiesen.

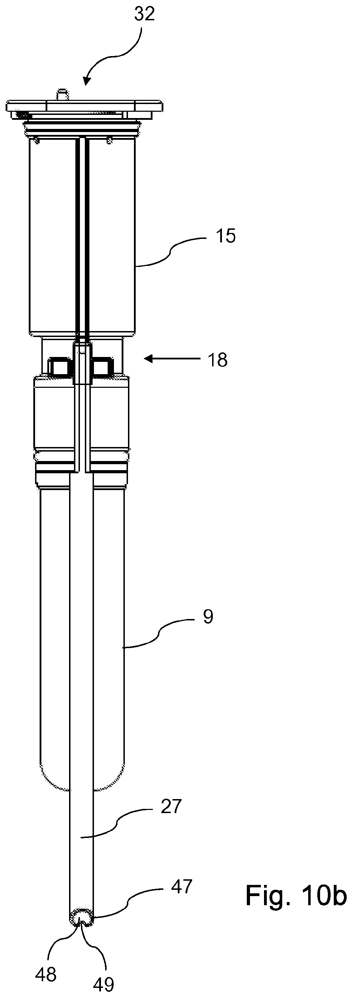

Fig. 10b zeigt die Anordnung auf Fig. 10a von der Rückseite her gesehen. Auch hier sind die Abschrägung 47 und die zusätzliche Öffnung 49 erkennbar.

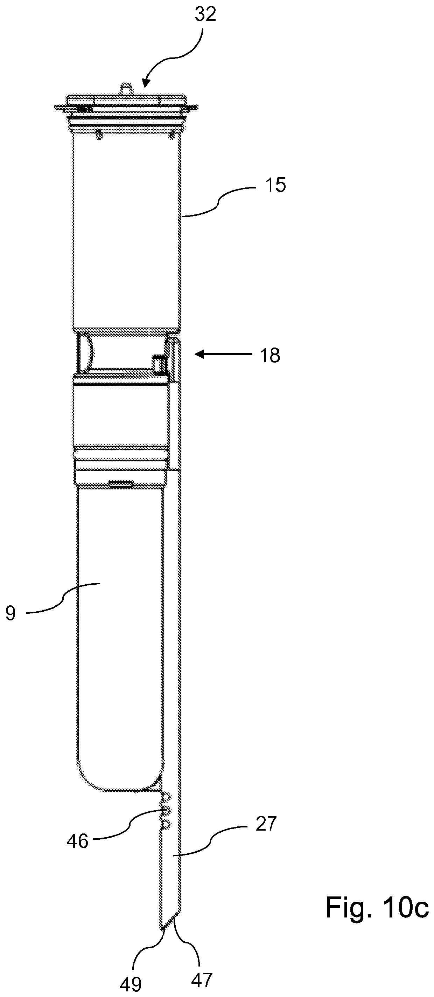

Fig. 10c zeigt den Gegenstand aus den Fig. 10a und 10b von der Seite her gesehen. Unter Bezugnahme auf die Beschreibungen zu den Fig. 10a und 10b sind weitere Ausführungen dazu nicht erforderlich.

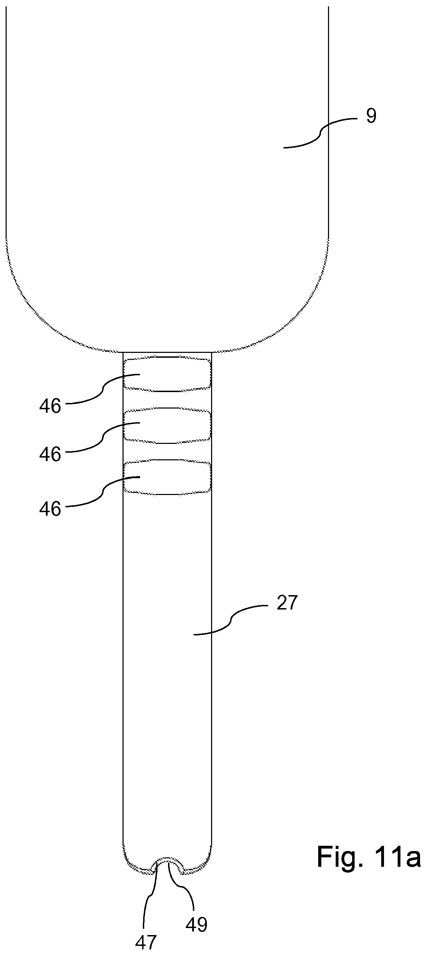

Fig. 11a zeigt in einer vergrößerten Darstellung das freie Ende des Steigrohrs 27. Die Einkerbungen 46 zum Abknicken des Steigrohrs 27 und das freie Ende des Steigrohrs 27 mit der Zusatzöffnung 48 ist erkennbar.

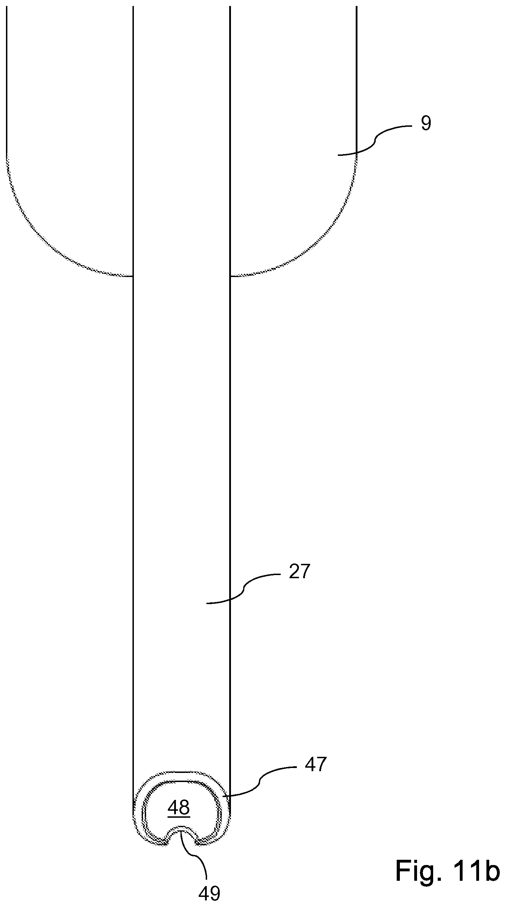

Fig. 11b zeigt den Gegenstand aus Fig. 11a von der anderen Seite her gesehen, das heißt von der Seite des Steigrohrs 27 her gesehen. Weitere Ausführungen dazu erübrigen sich an dieser Stelle.

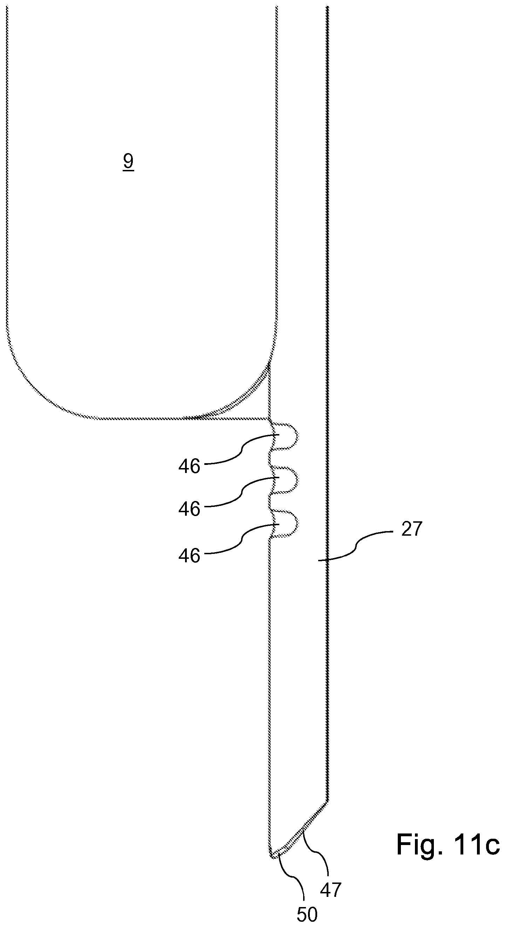

Fig. 11c zeigt den Gegenstand aus den Fig. 11a und 11b von der Seite her gesehen. Hier ist deutlich erkennbar, dass am freien Ende des Steigrohrs 27 eine zweite Abschrägung 50 vorgesehen ist, so dass auch bei einer vollflächigen Anlage der beiden Abschrägungen 47, 50 am Boden des Behältnisses keine abdichtende Wirkung entsteht und es möglich ist, das Strömungsmedium in das Steigrohr 27 hineingelangt

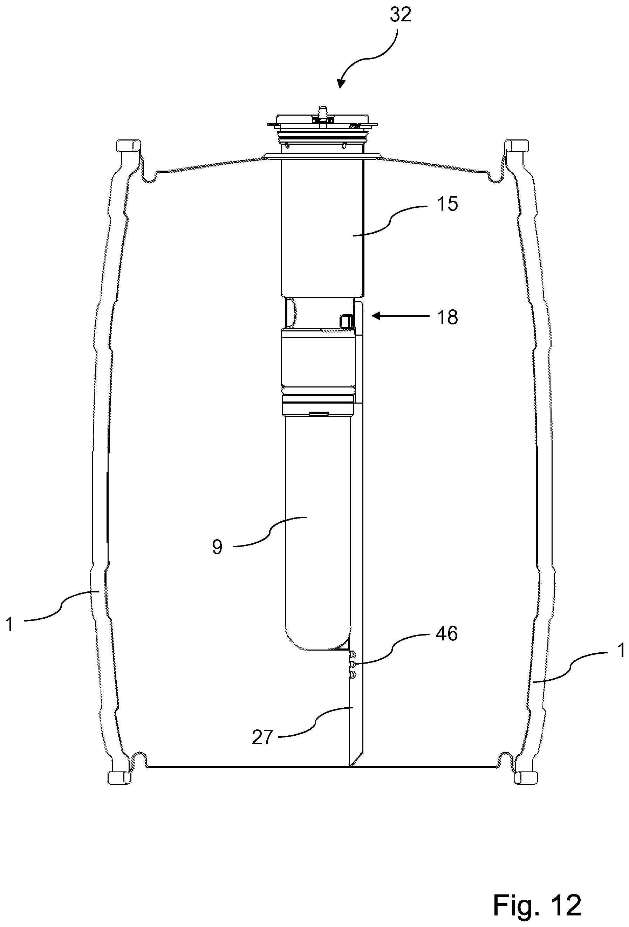

Fig. 12 zeigt den erfindungsgemäßen Gegenstand im eingesetzten Zustand, das heißt eingesteckt in ein Fass. Die gesamte Vorrichtung ist gerade so weit in das Fass eingesteckt, dass das Steigrohr 27 am freien Ende Bodenberührung hat.

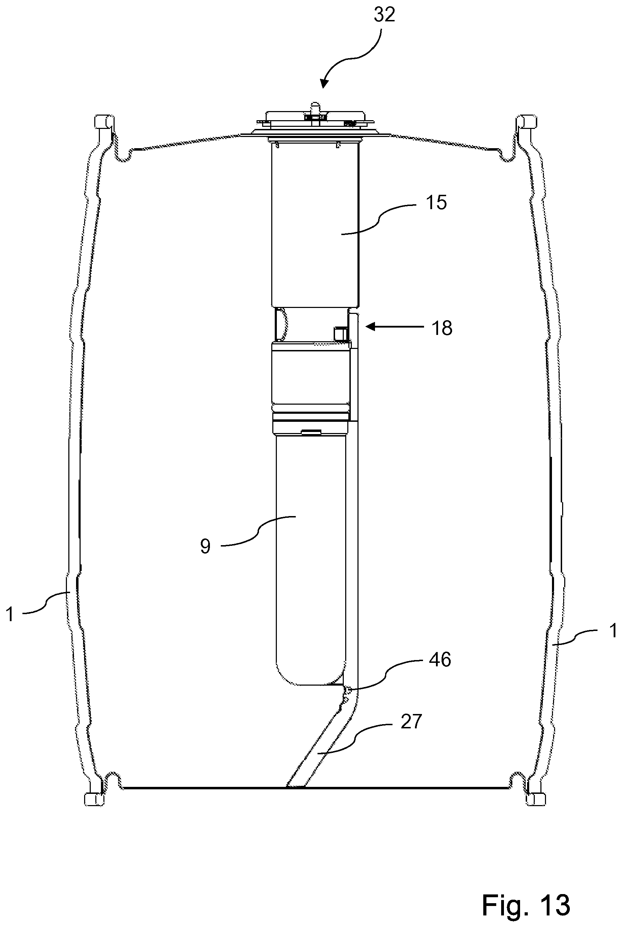

Fig. 13 zeigt eine Situation, wonach die erfindungsgemäße Vorrichtung komplett in das Fass eingesteckt und arretiert ist. Das freie Ende des Steigrohrs 27 kommt am Boden des Fasses zur Anlage und ist entsprechend den zu den Einkerbungen 46 hin abgeknickt. Flüssigkeit gelangt vom freien Ende des Steigrohrs 27 her in dieses hinein, nämlich aufgrund der in Fig. 13 nicht erkennbaren beiden Abschrägungen 47 und 49 und aufgrund der zusätzlichen Öffnung 48, wie dies die voranstehenden Figuren deutlich zeigen.

Zum besseren Verständnis der Funktionsweise der das Steigrohr betreffenden Merkmale sei Folgendes ausgeführt:
Die gesamte Einheit bzw. Vorrichtung, an der das Steigrohr angebracht ist, wird von oben her in das Behältnis eingebracht. Die Einheit ist so dimensioniert, dass das Steigrohr mit seiner Steigrohrspitze am Boden des Behältnisses zur Anlage kommt. Mit anderen Worten steht die Einheit in dem Behältnis auf der Steigrohrspitze.

Wird die Einheit weiter in das Behältnis eingebracht, nämlich bis hin zu einer Rastposition, wird die Steigrohrspitze entsprechend dem an der Spitze ausgebildeten Winkel (daraus resultierend eine Abschrägung) in die bevorzugte Knickrichtung gelenkt, die durch die Einkerbungen im Steigrohr definiert sind. Aufgrund der im Steigrohr ausgebildeten Einkerbungen, Ausnehmungen oder dergleichen ist das Steigrohr in der Lage, an der durch die Einkerbungen definierte Stelle abzuknicken.

Direkt angrenzend an die Einkerbungen ist ein Versteifungssteg als Widerlage für das Steigrohr ausgebildet. Aufgrund des größtmöglichen Abstandes zwischen der Steigrohrspitze und dem Versteifungssteg tritt am Versteifungssteg das größtmögliche Biegemoment auf. So wird dort, von unten nach oben bis zur letzten Einkerbungen, das Abknicken des Steigrohrs eingeleitet.

Je weiter die Einheit in das Behältnis eingebracht wird, setzt sich das definierte Abknicken an den weiteren Einkerbungen fort, bis sich die Einheit in der gebrauchsfertigen Stellung befindet. Dabei befindet sich das Steigrohr nach definiertem Abknicken im Behälter.

Um zu verhindern, dass sich die endseitige Öffnung im Steigrohr durch Auflage am Boden des Behälters verschließt, sind besondere Vorkehrungen getroffen. So besitzt die Steigrohrspitze an Ihrer Auflagefläche zum Boden hin zwei unterschiedlich abgewinkelte Kreisringflächen, bedingt durch zwei unterschiedliche Winkel der Abschrägungen. Dadurch wird verhindert, dass die Steigrohrspitze plan am Boden des Behältnisses anliegt.

Sollte beim Einbringen des Steigrohrs eine Verpressung des Steigrohrs am Boden durch ungünstige Krafteinwirkungen stattfinden, ist eine weitere Maßnahme vorgesehen, nämlich an der Steigrohrspitze. Dort ist eine zweite Öffnung ausgebildet, durch die hindurch auch bei kompletter Anlage der endseitigen Kreisringfläche bzw. Schräge am Boden des Behältnisses Fluidum in das Steigrohr einströmen kann.

Zu der Funktion der gesamten Zapf- und Regeleinrichtung sei in Stichworten Folgendes ausgeführt:
- Der Ventilstössel sticht mit seiner Spitze die CO₂-Patrone an. Dies geschieht entweder bereits bei der Montage durch den Abfüller oder bei entsprechender Ausgestaltung des Dichtgehäuses und des Drehkolbens sowie des Federspanners durch den Verbraucher. Sobald die CO₂-Patrone aktiviert ist, steht unten am Ventilstössel der zum Fördern der Flüssigkeit dienende Druck an.
- Der Endkunde dreht den in der Transportposition befindlichen Zapfkopf gemäß einer Funktionsanweisung zwischen 10 bis 120° mit oder gegen den Uhrzeigersinn, je nach Ausführung.
- Der Zapfkopf ist mit seinem Aktivierungszapfen im Aktivierungssteg mit dem Drehkolben verbunden und dreht diesen entsprechend mit.
- Aufgrund der Drehbewegung des Drehkolbens wird das Eintrittsloch an der Dichtfläche des Drehkolbens mit dem Austrittsloch des Durchgangsbogens des Dichtgehäuses in Überdeckung gebracht. Der Fluidkanal (Steigrohr, Fließkanal, Schlauch) ist damit frei gegeben.
- Obere Aussparungen am Flansch des Dichtgehäuses geben den Zapfkopf frei, der sich nach oben aus dem Dichtgehäuse aus seiner Transportposition entnehmen lässt.
- Im Zapfkopf ist eine Ventilwalze ausgebildet, auf die ein Zapfhebel greift bzw. wirkt. Außerdem ist am Zapfkopf das freie Ende des Schlauchs befestigt. Der Zapfkopf wird gemeinsam mit dem Schlauch aus dem Dichtgehäuse bzw. aus dem Stauraum des Dichtgehäuses herausgezogen. Der Zapfkopf wird dann per Klemmeinrichtung, genauer gesagt an seiner Einkerbung, mit einem gewissen Druck von oben auf den Falz des Fasses aufgedrückt und kann dort mittels Rastnase unter dem Falz verrasten.
- Danach wird der Zapfhebel nach oben bewegt. Hierdurch dreht er die Ventilwalze. Diese gibt den Strömungspfad von Fluidkanal und Zapfkanal frei. Das Fluid kann durch den Auslauf austreten.
- Beim Zapfen sinkt der Druck im Inneren des Behälters. Sobald der Druck unter ein vorgegebenes Niveau sinkt, drückt die Regelfeder die Membran in Richtung Ventilstössel nach unten. Hierdurch entweicht CO₂ aus der CO₂-Patrone in Richtung Druckkammer und gelangt über den Ausströmungskanal unter dem O-Ring in Richtung Behälter. Der Druck im Behälter steigt wieder an. Zwischen Druckkammer und Behälter entsteht ein Druckausgleich. Beide Bereiche haben den gleichen Druck. Oberhalb der Membran herrscht Atmosphärendruck. dieser entsteht durch den freien Zugang zur Atmosphäre über die Durchgangsöffnung zwischen dem Federspanner, dem Drehkolben und dem Dichtgehäuse.
- Der Regeldruck in der Druckkammer wird durch die konkrete Ausführung der Regelfeder bestimmt, die bei vorherrschendem Druck über die Wirkfläche in der Druckkammer auf die Membran nach oben gedrückt wird. Der Ventilstössel wird dann nicht mehr aktiv aus der Regelfeder bzw. der Membran nach unten gedrückt. Es kann kein CO₂ mehr von der CO₂-Patrone in Richtung Druckkammer ausströmen.
- Der Druckausgleich ist so lange unterbunden bis erneut Druck aus dem Behälter durch das Zapfen entweicht. Der zuvor erörterte Regelvorgang beginnt erneut und widerholt sich beliebig, solange sich im Behältnis Flüssigkeit befindet bzw. solang die CO₂-Patrone Druckmedium zur Verfügung stellt.
- Sollte es zu einer Fehlfunktion beim Regeln des Drucks kommen, beispielsweise wenn CO₂ unkontrolliert und zu schnell in den Behälter entweicht, oder sollte der Behälter aufgrund einer großen Erwärmung in einen kritischen Druckzustand bis hin zum Berstbereich gelangen, kann mithilfe der eingebauten Überdrucksicherung das CO₂ ohne Bersten des Behälters kontrolliert entweichen.

Die Überdrucksicherung arbeitet wie folgt:
- Es ist eine Siegelscheibe mit Loch in der Mitte vorgesehen. Sie ist durch einen O-Ring von der Berstscheibe getrennt und abgedichtet. Hinter der Berstscheibe ist eine Feder angeordnet, die gegen die Berstscheibe drückt. Steigt der Druck im Inneren des Behälters über einen vorgegebenen Wert, hebt die Berstscheibe durch den vorherrschenden Druck im Loch der Siegelscheibe vom O-Ring ab. Die dahinterliegende Feder wird gestaucht. Entsprechend ist das Loch in der Siegelscheibe freigegeben und es kann an der Berstscheibe vorbei über das Dichtgehäuse Druck nach außen in die Atmosphäre entweichen.

Voranstehende Ausführungen zur Funktion der erfindungsgemäßen Zapfs- und Regeleinrichtung schränken diese über die konkreten Merkmale der Patentansprüche nicht ein. Sie dienen vielmehr zur Erörterung.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiele der erfindungsgemäßen Lehre lediglich zur Erörterung der beanspruchten Lehre dient, diese jedoch nicht auf das Ausführungsbeispiel einschränkt.

### Bezugszeichenliste

- 1: Behältnis, Fass, Bierfass
- 2: Deckel, Fassdeckel
- 3: Öffnung (oben im Behältnis)
- 4: Falz
- 5: Wandung (des Behältnisses)
- 6: Patronengehäuse
- 7: Patrone, Druckpatrone
- 8: Einschraubhülse
- 9: Druckhülse
- 10: Ventilstössel
- 11: Flanschfuß
- 12: Membrane
- 13: Federspanner
- 14: Regelfeder
- 15: Dichtgehäuse
- 16: Durchgangsöffnung
- 17: Drehkolben
- 18: Überdrucksicherung
- 19: Siegelscheibe
- 20: O-Ring
- 21: Berstscheibe, Berstring
- 22: Druckfeder
- 23: Dichtfläche
- 24: Durchgangsbogen
- 25: Eintrittsloch, Eintrittsöffnung
- 26: Fließkanal
- 27: Steigrohr
- 28: Freiraum
- 29: Aktivierungssteg
- 30: Schlauch
- 31: Aktivierungszapfen
- 32: Zapfkopf
- 33: Eintrittskanal
- 34: Ventilwalze
- 35: Zapfhebel
- 36: Dichtung
- 37: nicht belegt
- 38: Originalitätssiegel
- 39: Stauraum (im Dichtgehäuse)
- 40: Klemmeinrichtung
- 41: Auslauf
- 42: Pfeil
- 43: Lasche, Schild
- 44: Befestigungsmanschette, Flansch
- 45: Versteifungselement
- 46: Einkerbungen
- 47: erste Abschrägung
- 48: Öffnung
- 49: zusätzliche Öffnung
- 50: zweite Abschrägung

## Patentansprüche

1. Zapf- und Regeleinrichtung zum Ausbringen einer Flüssigkeit aus einem Behältnis (1), insbesondere aus einem Getränkebehältnis, vorzugsweise zum Ausbringen eines Bieres oder eines Biergetränks aus einem Bierfass, vorzugsweise aus einem 5L-Party-Bierfass, mit einer stab- oder zylinderförmigen Anordnung aus Druckeinheit, Regeleinheit und Zapfeinheit, die vorzugsweise durch eine Öffnung (48) im Deckel (2) des Behältnisses (1) nahezu bündig in das Behältnis (1) einsteckbar ist, wobei die Druckeinheit als unteres, erstes Gehäuseteil ein endseitiges Patronengehäuse (6) mit einer darin angeordneten Gaspatrone (7), vorzugsweise einer CO2-Patrone, umfasst, an das sich als zweites Gehäuseteil ein Dichtgehäuse (15) anschließt, in dem die Zapfeinheit in ihrer Transport- und Lagerposition weitestgehend angeordnet ist und das Dichtgehäuse (15) am freien Ende abschließt, wobei sich im eingebauten Zustand vom Dichtgehäuse (15) über das Patronengehäuse (6) hinweg, über dieses hinaus, in das Behältnis (1) ein mit der Zapfeinheit strömungsverbundenes Steigrohr (27) an den unteren Bereich im Behältnis (1) nahe am oder direkt am Boden erstreckt, wobei das Steigrohr (27) aus einem starren, festen Material, vorzugsweise aus Kunststoff ist und wobei das Steigrohr (27) unterhalb des Patronengehäuses (6) mit einer Knickfunktion ausgestattet ist, die beim Einstecken der Einrichtung in das Behältnis (1) bzw. beim Verbringen in eine vorgegebene Rastposition und bei Bodenberührung ein definiertes Abknicken des Steigrohres (27) ermöglicht.

2. Zapf- und Regeleinrichtung nach Anspruch 1, **dadurch gekennzeichnet, dass** das Steigrohr (27) außen am Patronengehäuse (6) angebracht oder in dieses integriert ist.

3. Zapf- und Regeleinrichtung nach Anspruch 1 oder 2, **dadurch gekennzeichnet, dass** sich das Steigrohr (27) vom unteren Ende eines Durchgangsbogens (24) des Dichtgehäuses (15) aus über das Patronengehäuse (6) hinweg nach unterhalb des Patronengehäuses (6) erstreckt und/oder dass das Steigrohr (27) unterhalb des Patronengehäuses (6), vorzugsweise auf der dem Patronengehäuse (6) zugewandten Innenseite, mindestens eine, vorzugsweise drei Einkerbungen (46) zur Realisierung der Knickfunktion aufweist.

4. Zapf- und Regeleinrichtung nach einem der Ansprüche 1 bis 3, **dadurch gekennzeichnet, dass** am unteren Bereich des Patronengehäuses (6), an das Steigrohr (27) angrenzend, ein Versteifungselement (45) als Widerlager für das Steigrohr (27) ausgebildet ist, welches bei Krafteinwirkung auf das Steigrohr (27) durch seine Funktion als Widerlage ein Abknicken des Steigrohrs (27) begünstigt.

5. Zapf- und Regeleinrichtung nach einem der Ansprüche 1 bis 4, **dadurch gekennzeichnet, dass** das Steigrohr (27) am freien Ende eine abgeschrägte Steigrohrspitze aufweist, die bei Bodenberührung dem Steigrohr (27) eine bevorzugte Knickrichtung vermittelt und/oder
dass das Steigrohr (27) am freien Ende zwei Abschrägungen (47 und 50) mit unterschiedlichen Winkeln aufweist, die aufgrund der so entstehenden abgeknickten Fläche verhindern, dass die Steigrohrspitze vollflächig am Boden anliegt.

6. Zapf- und Regeleinrichtung nach Anspruch 5, **dadurch gekennzeichnet, dass** das Steigrohr (27) im Bereich der einfach oder doppelt geschrägten Steigrohrspitze eine zusätzliche Öffnung (49) im Sinne einer Ausnehmung aufweist, so dass auch bei flächiger Anlage der geschrägten Steigrohrspitze am Boden Flüssigkeit in das Steigrohr (27) eindringen bzw. eingesogen werden kann.

7. Zapf- und Regeleinrichtung nach einem der Ansprüche 1 bis 6, **dadurch gekennzeichnet, dass** die Zapfeinheit von einer in die Anordnung eingesteckten Transport- und Lagerposition in eine aus der Anordnung entnommene und mit dieser strömungsverbundenen Gebrauchsposition verbringbar ist, und wobei die entnommene Zapfeinheit an das Behältnis (1), vorzugsweise an dessen Rand, Falz (4) oder dgl. zur Handhabung oder Betätigung anbringbar ist.

8. Zapf- und Regeleinrichtung nach Anspruch 1 bis 7, **dadurch gekennzeichnet, dass** zwischen den beiden Gehäuseteilen ein mittleres Gehäuseteil oder ein Übergangsbereich in den beiden Gehäuseteilen mit der Regeleinheit ausgebildet ist.

9. Zapf- und Regeleinrichtung nach Anspruch 8, **dadurch gekennzeichnet, dass** außerhalb des Patronengehäuses (6) und ggf. des mittleren Gehäuseteils oder des Übergangsbereichs, ggf. als integraler Bestandteil der Gehäuseteile, ein Steigrohr (27) zum druckbedingten Aufsteigen der Flüssigkeit ausgebildet ist, welches im Bereich des Dichtgehäuses (15) in dieses mündet und im Innern des Dichtgehäuses (15) in einen internen Fließkanal (26) mündet, der über eine elastische Strömungsverbindung mit einem Zapfkanal der Zapfeinheit strömungsverbunden ist, wobei die elastische Strömungsverbindung als elastischer Schlauch (30) ausgeführt ist, der gerade so lang ist, dass die Zapfeinheit in ihre Gebrauchsposition verbringbar ist.

10. Zapf- und Regeleinrichtung nach einem der Ansprüche 1 bis 9, **dadurch gekennzeichnet, dass** die Druckeinheit eine Druckhülse (9) mit einer Einschraubhülse mit Ventilstössel (10) umfasst, der über die damit wirkverbundene Regeleinheit betätigbar ist, wobei die Druckpatrone (7) in die Einschraubhülse eingeschraubt ist und über den Ventilstössel (10) betätigbar ist, wobei die Regeleinheit eine auf den Ventilstössel (10) wirkende Membran (12) umfasst, die dem Druck einer zwischen der Druckhülse (9) und der Membran (12) ausgebildeten Drucckammer ausgesetzt ist und gegen den Druck eines Federkraft beaufschlagten Druckspanners die Druckpatrone (7) über den Ventilstössel (10) öffnet oder schließt.

11. Zapf- und Regeleinrichtung nach einem der Ansprüche 1 bis 10, **dadurch gekennzeichnet, dass** zwischen der Regeleinheit und der Zapfeinheit, vorzugsweise in einem der Regeleinheit zugewandten Bereich des Dichtgehäuses (15), Überdrucksicherung (18) vorgesehen ist, die eine Federkraft beaufschlagte Berstscheibe (21) nebst Siegelring umfassen kann.

12. Zapf- und Regeleinrichtung nach einem der Ansprüche 1 bis 11, **dadurch gekennzeichnet, dass** die Zapfeinheit einen Zapfkopf (32) mit einem sich an den elastischen Schlauch (30) anschließenden Zapfkanal und einen zur Betätigung dienendem Zapfhebel (35) umfasst wobei, die Zapfeinheit eine Ventilwalze (34) umfassen kann, die auf Betätigung des Zapfhebels (35) den Zapfkanal sukzessive öffnen oder schließen kann und/oder wobei die Zapfeinheit an ihrem stirnseitigen Ende ein Handhabungsorgan zum Herausziehen der Zapfeinheit aus der Transportposition in die Betätigungsposition umfasst, wobei in der Transportposition ein Originalitätssiegel (38) den Zapfkopf (32) mit dem Dichtgehäuse (15) lösbar verbinden kann und ggf. das freie Ende des Zapfkanals verschließen kann, welches sich beim Herausziehen der Zapfeinheit mittels Handhabungsorgan von dem Dichtgehäuse (15) irreversibel löst oder bricht und ggf. den Zapfkanal zum freien Auslauf (41) freigibt.

13. Zapf- und Regeleinrichtung nach Anspruch 12, **dadurch gekennzeichnet, dass** im Zapfkopf (32) eine Klemmeinrichtung (40) vorgesehen ist, die zum klemmenden Aufstecken des Zapfkopfes (32) auf den Rand oder Falz (4) des Behältnisses (1) dient.

14. Zapf- und Regeleinrichtung nach einem der Ansprüche 1 bis 13, **dadurch gekennzeichnet, dass** das Dichtgehäuse (15) an seinem freien Ende einen Flansch (44) oder eine umlaufende Schulter zur äußeren Anlage an den Rand der Öffnung (48) im Deckel (2) des Behältnisses (1) aufweist, wobei das Dichtgehäuse (15) unter bzw. hinter dem Flansch (44) oder der Schulter eine Verrastung mit Dichtmitteln zum Abdichten gegenüber der Öffnung (48) im Deckel (2) des Behältnisses (1) aufweisen kann.

15. Behältnis, insbesondere Getränkebehältnis, vorzugsweise Bierfass für Bier oder für ein Biergetränk, beispielsweise 5L-Party-Bierfass, mit einer Zapf- und Regeleinrichtung zum Ausbringen einer Flüssigkeit nach einem der Ansprüche 1 bis 14.

## Claims

1. A tap and control device for dispensing a liquid from a container (1), in particular a beverage container, preferably for dispensing a beer or beer beverage from a beer keg, preferably from a 5-liter party beer keg, having a rod-shaped or cylindrical assembly composed of a pressure unit, a regulator unit, and a tap unit, which can preferably be inserted almost flush into the container (1) through an opening (48) in the lid (2) of the container (1), wherein the pressure unit comprises a lower, first housing part in the form of a cartridge housing (6) at the end with a gas cartridge (7), preferably a CO₂ cartridge, positioned therein, which first housing part is adjoined by a second housing part in the form of a sealing housing (15), in which the tap unit is positioned as far as possible in its transport and storage position and closes off the sealing housing (15) at the free end, wherein in the installed state, a riser pipe (27) fluidically connected to the tap unit extends from the sealing housing (15) beyond the cartridge housing (6) into the container (1) to the lower region in the container (1) close to or directly against the bottom, wherein the riser pipe (27) is made of a rigid, sturdy material, preferably of plastic, and wherein the riser pipe (27) is provided with a bending function below the cartridge housing (6), which, when the device is inserted into the container (1) or when the device is moved into a predetermined locking position and upon contact with the bottom, enables a defined bending of the riser pipe (27).

2. The tap and control device according to claim 1, **characterized in that** the riser pipe (27) is attached to the outside of the cartridge housing (6) or is integrated into it.

3. The tap and control device according to claim 1 or 2, **characterized in that** the riser pipe (27) extends from the lower end of a passage bend (24) of the sealing housing (15) beyond the cartridge housing (6) to below the cartridge housing (6) and/or
the riser pipe (27) has at least one, preferably three, notches (46) below the cartridge housing (6), preferably on the inside facing the cartridge housing (6), for implementing the bending function.

4. The tap and control device according to one of claims 1 to 3, **characterized in that** in the lower region of the cartridge housing (6) adjacent to the riser pipe (27), a stiffening element (45) is embodied as an abutment for the riser pipe (27), which, thanks to its function as an abutment, promotes a bending of the riser pipe (27) when force is exerted on the riser pipe (27).

5. The tap and control device according to one of claims 1 to 4, **characterized in that** the riser pipe (27) has a beveled riser pipe tip at the free end, which gives the riser pipe (27) a preferred bending direction when it comes into contact with the bottom and/or
the free end of the riser pipe (27) has two bevels (47 and 50) with different angles, which, due to the resulting bent surface, prevent the entire surface of the riser pipe tip from coming into contact with the bottom.

6. The tap and control device according to claim 5, **characterized in that** the riser pipe (27) has an additional opening (49) in the form of a recess in the region of the single-beveled or double-beveled riser pipe tip, so that liquid can penetrate or be drawn into the riser pipe (27) even when the beveled riser pipe tip is resting flat against the bottom.

7. The tap and control device according to one of claims 1 to 6, **characterized in that** the tap unit can be moved from a transport and storage position, in which it is inserted into the assembly, into a use position, in which it has been removed from the assembly, and can be fluidically connected thereto, and wherein the removed tap unit can be attached to the container (1), preferably to its edge, skirt (4), or the like, for use or actuation.

8. The tap and control device according to one of claims 1 to 7, **characterized in that** a middle housing part is embodied between the two housing parts or a transition region is embodied in the two housing parts, in which the regulator unit is embodied.

9. The tap and control device according to claim 8, **characterized in that** outside the cartridge housing (6) and possibly outside the middle housing part or the transition region, possibly as an integral component of the housing parts, a riser pipe (27) is embodied for the pressure-induced rise of the liquid, which riser pipe opens into the sealing housing (15) in the region of the latter and opens into an internal flow channel (26) in the interior of the sealing housing (15), which flow channel is fluidically connected to a tap channel of the tap unit via an elastic fluidic connection, the elastic fluidic connection being embodied as an elastic hose (30) that is just long enough for the tap unit to be brought into its use position.

10. The tap and control device according to one of claims 1 to 9, **characterized in that** the pressure unit comprises a pressure sleeve (9) with a screw-in sleeve and a valve plunger (10), which can be actuated via the regulator unit operatively connected thereto, wherein the pressure cartridge (7) is screwed into the screw-in sleeve and is actuatable via the valve plunger (10), wherein the regulator unit comprises a diaphragm (12), which acts on the valve plunger (10) and is exposed to the pressure of a pressure chamber formed between the pressure sleeve (9) and the diaphragm (12) and opens or closes the pressure cartridge (7) via the valve plunger (10) in opposition to the pressure of a spring-loaded pressure tensioner.

11. The tap and control device according to one of claims 1 to 10, **characterized in that** between the regulator unit and the tap unit, preferably in a region of the sealing housing (15) facing the regulator unit, an overpressure safety device (18) is provided, which can comprise a spring-loaded rupture disk (21) together with a sealing ring.

12. The tap and control device according to one of claims 1 to 11, **characterized in that** the tap unit comprises a tap head (32) with a tap channel adjoining the elastic hose (30) and a tap lever (35) for actuation, wherein the tap unit can comprise a valve roller (34), which can successively open or close the tap channel upon actuation of the tap lever (35) and/or wherein at its front end, the tap unit comprises a manipulating element for pulling the tap unit out of the transport position into the actuating position, wherein in the transport position, a tamper-evident seal (38) can detachably connect the tap head (32) to the sealing housing (15) and optionally can close the free end of the tap channel, and the tamper-evident seal irreversibly detaches from the sealing housing (15) or breaks when the tap unit is pulled out by means of the manipulating element and optionally, unblocks the tap channel to the open outlet (41).

13. The tap and control device according to claim 12, **characterized in that** a clamping device (40) is provided in the tap head (32), which is used for sliding the tap head (32) onto the edge or skirt (4) of the container (1) in a clamping fashion.

14. The tap and control device according to one of claims 1 to 13, **characterized in that** at its free end, the sealing housing (15) has a flange (44) or a circumferential shoulder for external contact with the edge of the opening (48) in the lid (2) of the container (1), wherein the sealing housing (15) can have a catch mechanism with sealing means under or behind the flange (44) or the shoulder for sealing against the opening (48) in the lid (2) of the container (1).

15. A container, in particular a beverage container, preferably a beer keg for beer or a beer beverage, for example a 5L party beer keg, that has the tap and control device for dispensing a liquid according to one of claims 1 to 14.

## Revendications

1. Dispositif de prélèvement et de régulation pour soutirer un liquide à partir d'un récipient (1), en particulier à partir d'un récipient pour boisson, de préférence pour soutirer une bière ou une boisson à base de bière à partir d'un fût de bière, de préférence à partir d'un fût de bière de 5 litres pour occasions festives, comprenant un agencement en forme de tige ou de cylindre composé d'une unité de pression, d'unité de régulation et d'unité de soutirage, qui peut être inséré de préférence presque à fleur dans le récipient (1) à travers une ouverture (48) ménagée dans le couvercle (2) du récipient (1), dans lequel l'unité de pression comprend, en tant que première partie inférieure de boîtier, un boîtier de cartouche (6) côté extrémité avec une cartouche de gaz (7) disposée à l'intérieur, de préférence une cartouche de CO², à laquelle se raccorde, en tant que seconde partie de boîtier, un boîtier d'étanchéité (15) dans lequel l'unité de soutirage est disposée très largement dans sa position de transport et de stockage et le boîtier d'étanchéité (15) se termine à l'extrémité libre, dans lequel, à l'état monté, à partir du boîtier d'étanchéité (15), au-delà du boîtier de cartouche (6), dans le récipient (1), un tube montant (27) en liaison d'écoulement avec l'unité de soutirage s'étend dans la zone inférieure dans récipient (1), près du fond ou directement sur le fond, dans lequel le conduit montant (27) est constitué d'un matériau rigide et solide, de préférence en matière plastique, et sans lequel le conduit montant (27) est doté, en dessous du boîtier de cartouche (6), d'une fonction de pliage qui, lors de l'insertion du dispositif dans le récipient (1) ou lors du déplacement dans une position d'encliquetage prédéfinie et lors du contact avec le fond, permet au conduit montant (27) de se plier de manière définie.

2. Dispositif de soutirage et de régulation selon la revendication 1, **caractérisé en ce que** le tube montant (27) est fixé à l'extérieur du boîtier de cartouche (6) ou intégré dans celui-ci.

3. Dispositif de soutirage et de régulation selon la revendication 1 ou 2, **caractérisé en ce que** le tube montant (27) s'étend depuis l'extrémité inférieure d'un coude traversant (24) du boîtier étanche (15) au-dessus du boîtier de cartouche (6) jusqu'au-dessous du boîtier de cartouche (6) et/ou
**en ce que** le tube montant (27) présente, au-dessous du boîtier de cartouche (6), de préférence sur le côté intérieur tourné vers le boîtier de cartouche (6), au moins une, de préférence trois encoches (46) pour réaliser la fonction de pliage.

4. Dispositif de soutirage et de régulation selon l'une des revendications 1 à 3, **caractérisé en ce que**, dans la zone inférieure du boîtier de cartouche (6), adjacent au tube montant (27), un élément de renfort (45) est conçu en tant que contre-appui pour le tube montant (27), lequel, en cas d'application d'une force sur le tube montant (27), favorise le fléchissement du tube montant (27) grâce à sa fonction de contre-appui.

5. Dispositif de soutirage et de régulation selon l'une des revendications 1 à 4, **caractérisé en ce que** le tube montant (27) présente à son extrémité libre une pointe de tube montant biseautée qui, lorsqu'elle touche le fond, confère au tube montant (27) une direction de pliage préférentielle et/ou
**en ce que** le tube montant (27) présente à son extrémité libre deux biseaux (47 et 50) avec des angles différents qui, en raison de la surface pliée ainsi créée, empêchent la pointe du tube montant de reposer au fond sur toute sa surface.

6. Dispositif de soutirage et de régulation selon la revendication 5, **caractérisé en ce que** le tube montant (27) présente, dans la zone de la pointe du tube montant à simple ou double biseau, une ouverture (49) supplémentaire sous la forme d'un évidement, de sorte que même lorsque la pointe de tube montant biseautée repose à plat sur le fond, le liquide peut pénétrer ou être aspiré dans le tube montant (27).

7. Dispositif de soutirage et de régulation selon l'une des revendications 1 à 6, **caractérisé en ce que** l'unité de soutirage peut être déplacée d'une position de transport et de stockage insérée dans l'agencement à une position d'utilisation retirée de l'agencement et en liaison d'écoulement avec celui-ci, et dans lequel l'unité de soutirage retirée peut être fixée au récipient (1), de préférence sur son bord, sa rainure (4) ou similaire, pour la manipulation ou l'actionnement.

8. Dispositif de soutirage et de régulation selon les revendications 1 à 7, **caractérisé en ce qu'**une partie centrale de boîtier ou une zone de transition dans les deux parties de boîtier est formée entre les deux parties de boîtier avec l'unité de régulation.

9. Dispositif de soutirage et de régulation selon la revendication 8, **caractérisé en ce qu'**à l'extérieur du boîtier de cartouche (6) et, le cas échéant, de la partie centrale de boîtier ou de la zone de transition, éventuellement en tant que partie intégrante des parties de boîtier, un tube montant (27) est formé pour la montée du liquide sous l'effet de la pression, lequel débouche dans la zone du boîtier d'étanchéité (15) et, à l'intérieur du boîtier d'étanchéité (15) débouche dans un canal d'écoulement interne (26) qui est relié à un canal de soutirage de l'unité de soutirage par une liaison d'écoulement élastique, dans lequel la liaison d'écoulement élastique est réalisée sous la forme d'un tuyau flexible (30) dont la longueur est juste suffisante pour que l'unité de soutirage puisse être amenée dans sa position d'utilisation.

10. Dispositif de soutirage et de régulation selon l'une des revendications 1 à 9, **caractérisé en ce que** l'unité de pression comprend une douille de pression (9) avec une douille à visser avec poussoir de soupape (10), qui peut être actionné via l'unité de régulation qui y est reliée de manière fonctionnelle, dans lequel la cartouche de pression (7) est vissée dans la douille à visser et peut être actionnée par l'intermédiaire du poussoir de soupape (10), dans lequel l'unité de régulation comprend une membrane (12) agissant sur le poussoir de soupape (10), qui est soumise à la pression d'une chambre de pression formée entre la douille de pression (9) et la membrane (12) et qui ouvre ou ferme la cartouche de pression (7) via le poussoir de soupape (10) contre la pression d'un tendeur de pression soumis à la force d'un ressort.

11. Dispositif de soutirage et de régulation selon l'une des revendications 1 à 10, **caractérisé en ce qu'**un dispositif (18) de sécurité contre la surpression est prévu entre l'unité de régulation et l'unité de soutirage, de préférence dans une zone du boîtier d'étanchéité (15) tournée vers l'unité de régulation, qui peut comprendre un disque de rupture (21) soumis à une force élastique ainsi qu'une bague d'étanchéité.

12. Dispositif de soutirage et de régulation selon l'une des revendications 1 à 11, **caractérisé en ce que** l'unité de soutirage comprend une tête de soutirage (32) avec un canal de soutirage relié au tuyau élastique (30) et un levier de soutirage (35) servant à l'actionnement, dans lequel l'unité de soutirage peut comprendre un rouleau à soupape (34) qui, lors de l'actionnement du levier de soutirage (35), peut ouvrir ou fermer successivement le canal de soutirage et/ou dans lequel l'unité de soutirage comprend, à son extrémité frontale, un organe de manipulation permettant de retirer l'unité de soutirage de la position de transport pour la placer en position d'actionnement, dans lequel un sceau d'origine (38) peut relier de manière amovible la tête de soutirage (32) au boîtier d'étanchéité (15) et, le cas échéant, fermer l'extrémité libre du canal de soutirage, qui se détache ou se brise de manière irréversible du boîtier d'étanchéité (15) lors du retrait de l'unité de soutirage à l'aide de l'organe de manipulation et libère, le cas échéant, le canal de soutirage vers la sortie (41) libre.

13. Dispositif de soutirage et de régulation selon la revendication 12, **caractérisé en ce qu'**un dispositif de serrage (40) est prévu dans la tête de soutirage (32), lequel sert à fixer par serrage la tête de soutirage (32) sur le bord ou la rainure (4) du récipient (1).

14. Dispositif de soutirage et de régulation selon l'une des revendications 1 à 13, **caractérisé en ce que** le boîtier d'étanchéité (15) présente à son extrémité libre une bride (44) ou un épaulement périphérique destiné à venir en appui extérieur contre le bord de l'ouverture (48) dans le couvercle (2) du récipient (1), dans lequel le boîtier d'étanchéité (15) peut présenter, sous ou derrière la bride (44) ou l'épaulement, un dispositif d'encliquetage avec des moyens d'étanchéité pour assurer l'étanchéité par rapport à l'ouverture (48) dans le couvercle (2) du récipient (1).

15. Récipient, en particulier récipient pour boisson, de préférence fût de bière pour bière ou pour une boisson à base de bière, par exemple fût de bière de 5 litres pour occasions festives, avec un dispositif de soutirage et de régulation pour soutirer un liquide selon l'une des revendications 1 à 14.
